(19) Europäisches Patentamt
European Patent Office
Office européen des brevets

(11) **EP 4 248 760 A1**

(12) **EUROPEAN PATENT APPLICATION**
published in accordance with Art. 153(4) EPC

(43) Date of publication:
**27.09.2023 Bulletin 2023/39**

(21) Application number: **21915316.0**

(22) Date of filing: **28.12.2021**

(51) International Patent Classification (IPC):
**A23K 40/10** (2016.01)     **A23K 50/42** (2016.01)

(52) Cooperative Patent Classification (CPC):
**A23K 40/10; A23K 50/42**

(86) International application number:
**PCT/JP2021/048863**

(87) International publication number:
**WO 2022/145458 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2020   JP 2020219694
27.12.2021   JP 2021213428**

(71) Applicant: **Unicharm Corporation
Shikokuchuo-shi, Ehime 799-0111 (JP)**

(72) Inventors:
• **IKEDA Go**
**Itami-shi, Hyogo 664-0831 (JP)**
• **TAKAI Hisashi**
**Itami-shi, Hyogo 664-0831 (JP)**
• **YAMANISHI Hiroto**
**Itami-shi, Hyogo 664-0831 (JP)**

(74) Representative: **Dolleymores
9 Rickmansworth Road
Watford, Hertfordshire WD18 0JU (GB)**

(54) **PET FOOD**

(57)     Pet food having a moisture content of 15% or less wherein when immersed in water for 5 seconds the pet food absorbs at least 30 mass% water with respect to 100 mass% of the pet food.

**EP 4 248 760 A1**

**Description**

FIELD

The present invention relates to a pet food.

This application claims priority based on Japanese Patent Application No. 2020-219694 filed in Japan on December 28, 2020, and Japanese Patent Application No. 2021-213428 filed in Japan on December 27, 2021, the contents of which are incorporated herein by reference.

BACKGROUND

A pet food can be categorized into a staple food and in-between meal snacks in a case where the feeding purposes are categorized with opportunity. The pet food as the staple food is called a "comprehensive nutritional food," which enables a pet to take necessary nutrients so long as the pet food and water are given to it.

On the other hand, an "in-between meal snack" is a pet food that is intended to be given in a limited amount in a case of pet training and exercise, or as a reward.

As classification of pet foods according to the purposes, pet foods can be categorized into a "comprehensive nutritional food," "in-between meal snacks," "therapy diet," and a "food for other purposes" that does not fall under any of them.

Classification according to the moisture content of pet foods is broadly categorized into dry foods having a moisture content of approximately 10% (12% or less), soft foods having a moisture content of approximately 25 to 35%, and subjected to foaming treatment, semi-moist foods having a moisture content of approximately 25 to 35%, and not subjected to foaming treatment, and wet foods having a moisture content of approximately 75%. In recent years, demand for pet foods having a relatively low moisture content has been increasing from the viewpoints of ease of handling, good storage properties, and the like.

Dry-type pet foods are generally stiffer than other types of pet foods and, of course, are stiffer than most human-eating foods. Dogs and cats are originally carnivorous, and their teeth have evolved primarily to capture prey or to cut meat, and are not suitable for breaking hard ones with molars. For such dogs and cats, conventional hard dry-type pet foods cannot be said as easy-to-eat foods. The easy-to-grind grains are easy-to-eat grains, and the easy-to-eat property leads to a high palatability.

Patent Literature 1 discloses a pet food in which a dry-type pet food is immersed in water for 10 minutes to decrease the degree of hardness of the pet food, thereby increasing the biting properties (palatability) of the pet with respect to the pet food.

[CITATION LIST]

[PATENT LITERATURE]

Patent Literature 1: Japanese Unexamined Patent Application Publication No. 2014-187920

SUMMARY

[TECHNICAL PROBLEM]

In the pet food described in Patent Literature 1, when feeding a pet, a time for immersing the pet food in water for 10 minutes is provided, thereby, decreasing the degree of hardness of the pet food and enhancing palatability. However, from the viewpoint of handling of the pet food by a feeder, it can be said that the immersion time of 10 minutes is long. Further, Patent Literature 1 discloses that the degree of hardness and the water absorption rate of a pet food have an antinomy relationship and that, when the value of the degree of hardness becomes large (becomes hard), the value of the water absorption rate tends to become small (become not to absorb water).

The present invention was achieved in light of the above-described circumstances, and an object of the present invention is to provide a pet food having an excellent water absorption rate even when immersed for a short time, and further enhancing palatability.

[SOLUTION TO PROBLEM]

In order to achieve the above-described object, the present invention has the following aspects.

[1] A pet food having a moisture content of 15% or less, wherein when the pet food is immersed in water for 5 seconds, 30 mass% or more of water is absorbed with respect to 100 mass% of the pet food.

[2] The pet food according to [1], wherein a hardness of a grain of the pet food immersed in the water for 5 seconds is 50.0 N or less.

[3] The pet food according to [1] or [2], wherein when the pet food is immersed in the water for 60 seconds, 50 mass% or more of the water is absorbed with respect to 100 mass% of the pet food.

[4] The pet food according to any one of [1] to [3], wherein when the pet food is immersed in the water for 5 seconds, a dough of the pet food expands by 5 vol% or more with respect to 100 vol% of the dough before the pet food is immersed in the water.

[5] The pet food according to any one of [1] to [4], wherein when the pet food is immersed in the water for 60 seconds, a dough of the pet food expands by 5 vol% or more with respect to 100 vol% of the dough before the pet food is immersed in the water.

[6] The pet food according to any one of [1] to [5], wherein when the pet food is immersed in the water for 5 seconds, an opening volume ratio of the pet food is 85% or less with respect to 100% of the opening volume ratio before the pet food is immersed in the water.

[7] The pet food according to any one of [1] to [6], wherein when the pet food is immersed in the water for 60 seconds, an opening volume ratio of the pet food is 80% or less with respect to 100% of the opening volume ratio before the pet food is immersed in the water.

[8] The pet food according to any one of [1] to [7], wherein when the pet food is immersed in the water for 5 seconds, a dough area in a cross section of a central portion of a grain of the pet food increases by 45% or more with respect to 100% of the dough area before the pet food is immersed in the water.

[9] The pet food according to any one of [1] to [8], wherein when the pet food is immersed in the water for 5 seconds, an opening area ratio of a cross section of a central portion of a grain of the pet food is 80% or less with respect to 100% of the opening area ratio before the pet food is immersed in the water.

[10] The pet food according to any one of [1] to [9], wherein when the pet food is immersed in the water for 5 seconds, a grain density of the pet food increases by 10% or more with respect to 100% of the grain density before the pet food is immersed in the water.

[11] The pet food according to any one of [1] to [10], wherein when the pet food is immersed in the water for 60 seconds, a grain density of the pet food increases by 15% or more with respect to 100% of the grain density before the pet food is immersed in the water.

[12] A pet food having a moisture content of 15% or less, wherein when the pet food is immersed in a liquid having a viscosity of 1.5 dPa·s for 5 seconds, 30 mass% or more of the liquid is absorbed with respect to 100 mass% of the pet food.

[13] The pet food according to [12], wherein a hardness of a grain of the pet food immersed in the liquid for 5 seconds is 50.0 N or less.

[ADVANTAGEOUS EFFECT OF THE INVENTION]

According to the present invention, a pet food having an excellent water absorption rate even when immersed for a short time, and further enhancing palatability, can be provided.

BRIEF DESCRIPTION OF DRAWINGS

FIG. 1 is a schematic diagram showing a pet food according to an embodiment of the present invention.

FIG. 2 is a schematic diagram illustrating a projection surface on which a pet food according to an embodiment of the present invention is projected in each direction.

FIG. 3 is a schematic diagram showing a pet food according to another embodiment of the present invention.

FIG. 4 is a schematic diagram illustrating a projection surface on which a pet food according to another embodiment of the present invention is projected in each direction.

FIG. 5 is a schematic diagram illustrating a producing method of a pet food of the present embodiment.

FIG. 6 is a CT image of a cross section of a central portion of a grain that is perpendicular to a plane from a first direction in FIG. 1, of a pet food according to an example before immersion in water.

FIG. 7 is a CT image of a cross section of a central portion of a grain that is perpendicular to a plane from a first direction in FIG. 1, of a pet food according to an example after being immersed in water for 5 seconds.

FIG. 8 is a CT image of a cross section of a central portion of a grain that is perpendicular to a plane from one direction, of a commercially available pet food for dogs before immersion in water.

FIG. 9 is a CT image of a cross section of a central portion of a grain that is perpendicular to a plane from one direction to a commercially available pet food for dogs after being immersed in water for 5 seconds.

FIG. 10 is a CT image of a cross section of a central portion of a grain that is perpendicular to a plane from one direction, of a commercially available pet food for cats before immersion in water.

FIG. 11 is a CT image of a cross section of a central portion of a grain that is perpendicular to a plane from one direction to a commercially available pet food for cats after being immersed in water for 5 seconds.

DESCRIPTION OF EMBODIMENTS

In the present specification, the term "pet" refers to an animal raised by a person. In a narrower sense, pets are animals that are kept and loved by their owners. In addition, the term "pet food" refers to feed for pets. A pet food according to the present invention can be sold as a "feed for animal" or an "animal feed".

In the present specification, the "palatability" is an index of whether or not a pet favors to eat, and is caused by texture, taste, odor, and the like.

In the present specification, a value of a moisture content is a value obtained by a "drying loss method".

The drying loss method is a method in which a sample is heated and dried by infrared irradiation, and the amount of moisture in the sample is determined from a mass change caused by evaporation of contained moisture. The moisture content can be measured using a well-known apparatus. For example, the moisture content can be measured with an Infrared Moisture Analyzer FD-720 (manufactured by Kett Electric Laboratory Co. Ltd.).

In the present specification, the moisture content and the water absorption amount are different definitions. The moisture content is the amount of moisture contained in the pet food itself. The water absorption amount is an amount of water absorbed by the pet food when the pet food is immersed in water.

In the present specification, the size of a grain of a pet food means a diameter in a case where the shape of the grain of the pet food is spherical, and the longest diameter in a case where the shape of the grain of the pet food is not spherical (cylindrical, polygonal columnar, plate-shaped, or the like).

(Pet food)

The pet food of the present embodiment (hereinafter, also referred to as the pet food of the first embodiment) is a pet food having a moisture content of 15% or less, in which when the pet food is immersed in water for 5 seconds, 30 mass% or more of water is absorbed with respect to 100 mass% of the pet food.

The pet food according to the present embodiment may consist of only the pet food of the first embodiment or may be a mixture of the pet food of the first embodiment and other pet foods. Other pet foods are not particularly limited and examples thereof include dry-type pet foods, materials, flakes, and the like other than the pet foods of the first embodiment. It is sufficient that, in the mixture of the pet food of the first embodiment and other pet foods, 1% or more of the pet food of the first embodiment is contained with respect to the total amount of the mixture.

< <Moisture content> >

The pet food of the present embodiment is a pet food having a moisture content of 15% or less. In a case where the moisture content of the pet food according to the present embodiment is 15% or less, the storage period of the pet food is relatively long and the odor of the pet food can be suppressed, which makes it easier for the breeder to handle the pet food.

The moisture content of the pet food according to the present embodiment is preferably 12% or less, and more preferably 10% or less. The lower limit value of the moisture content of the pet food is not particularly limited, but is typically 3% or more, preferably 4% or more, and more preferably 5% or more.

It is preferable that the water activity of the pet food of the present embodiment satisfies less than 0.65.

The spoilage of pet foods occurs mainly due to the degradation of proteins by bacteria and fungi. Depending on the type of microorganism that grows, it may cause food poisoning. In addition to the presence of nutrients and an appropriate temperature, the presence of an appropriate amount of water is essential for the growth of microorganisms. However, microorganisms can not utilize all of the water in the pet food, but can utilize the moisture, referred to as "free water".

Moisture in the pet food is largely divided into "bound water" and "free water" depending on the presence state of the pet food.

"Bound water" is water that is bound by hydrogen bonds to other components (proteins, carbohydrates, and the like) in pet foods, and in which the movement of the molecules is restricted. Therefore, "bound water" is not frozen even at 0°C, is not easily vaporized even at a high temperature, and is not utilized by microorganisms.

On the other hand, the term "free water" is a water in which the molecules can freely move around, and is represented by an index of water activity. "Water activity" is a value obtained by dividing the water vapor pressure of a food by the water vapor pressure of pure water under the same condition. The water activity has a large influence on the oxidation of lipids and the growth of microorganisms present in pet foods.

$$\text{Water activity (Aw)} = P/P_0$$

P: water vapor pressure of pet food
$P_0$: water vapor pressure of pure water

The pet food of the present embodiment may have a small grain shape in which the pet can cram all at into one's mouth, or may have a large grain shape in which the pet can bite multiple times, but it is preferable that the longest diameter of the pet food is 1 to 200 mm, more preferably 1 to 150 mm, and still more preferably 3 to 40 mm. Further, it is preferable that the shortest diameter of the pet food is 1 to 100 mm, more preferably 1 to 50 mm, and still more preferably 3 to 30 mm.

In the present specification, regarding the average long diameter of grains or small pieces, 20 grains or small pieces are arbitrarily taken out, the longest diameters thereof are measured with a caliper, and the average value of the longest diameters is defined as the average long diameter. In addition, the shortest diameters in a direction perpendicular to the longest diameter direction are measured, and the average value of the shortest diameters is defined as the average short diameter. The average long diameter of the pet food of the present embodiment is preferably 1 to 200 mm, more preferably 1 to 150 mm, and still more preferably 3 to 40 mm.

Furthermore, the average short diameter of the pet food of the present embodiment is preferably 1 to 100 mm, more preferably 1 to 50 mm, and still more preferably 3 to 30 mm.

The long diameter and the short diameter of the grains or small pieces may be measured by a micrometer, an image analysis, or the like.

< <Water absorption amount>>

The pet food of the present embodiment absorbs 30 mass% or more of water with respect to 100 mass% of the pet food when the pet food is immersed in water for 5 seconds. Hereinafter, the "amount of water absorbed in the pet food" will also be referred to as "water absorption amount" or "water absorption rate". Specifically, the water absorption rate when the pet food is immersed in water for 5 seconds is the ratio of the increase in the mass of the pet food to the original mass of the pet food when the pet food is immersed in water for 5 seconds.

In the present specification, regarding the temperature of water when measuring the water absorption rate, the water absorption rate typically means a value measured with water at 20°C, but, for example, may be a value measured with water at 5°C to 60°C. or a value measured with water at 15°C to 30°C. The lower the temperature is, the lower the water absorption rate is. Therefore, in a case where the water absorption rate for 5 seconds measured with water at a lower temperature is equal to or more than the above-described preferable value, it can be said that the water absorption of the pet food is higher.

The pet food whose water absorption amount is to be measured can be obtained by the following steps.

(Step 1A) Selecting one grain of the pet food to be measured.
(Step 2A) Measuring the mass of the one grain with an electronic balance.
(Step 3A) Pinching the grain with tweezers and immersing the grain in water.
(Step 4A) 5 seconds later, taking the grain out of water.
(Step 5A) After Step 4A, leaving the taken-out grain to stand for 5 seconds, and then rolling the grain on a sieve (1 mm opening) to remove water attached to the grain surface.
(Step 6A) Measuring the mass of the one grain after immersion with an electronic balance.

The water absorption amount can be calculated as the following expression (1), by subtracting the mass of the pet food in (Step 2A) from the mass of the pet food after (Step 6A) and dividing the resulting subtracted value by the mass of the pet food in (Step 2A).

$$\text{Water absorption rate for 5 seconds (mass\%)} = \text{(mass (g) of pet food after (step 6A)} - \text{(mass (g)} $$
$$\text{of pet food in (step 2A))/mass (g) of pet food in (step 2A)} \times 100 \cdots (1)$$

In the present embodiment, when the pet food is immersed in water for 5 seconds, with respect to 100 mass% of the pet food, 30 mass% or more of water is absorbed, preferably 50 mass% or more of water is absorbed, more preferably 80 mass% or more of water is absorbed, and still more preferably 130 mass% or more of water is absorbed.
The pet food of the present embodiment may absorb 40 mass% or more of water with respect to 100 mass% of the pet food when the pet food is immersed in water for 30 seconds.
In the above-described (step 4A), by changing "5 seconds" to "30 seconds", the pet food whose water absorption amount is to be measured can be obtained.
In the present embodiment, when the pet food is immersed in water for 30 seconds, with respect to 100 mass% of the pet food, preferably 40 mass% or more of water is absorbed, more preferably 60 mass% or more of water is absorbed, and still more preferably 100 mass% or more of water is absorbed.
The pet food of the present embodiment may absorb 50 mass% or more of water with respect to 100 mass% of the pet food when the pet food is immersed in water for 60 seconds.
In the above-described (step 4A), by changing "5 seconds" to "60 seconds", the pet food whose water absorption amount is to be measured can be obtained.
In the present embodiment, when the pet food is immersed in water for 60 seconds, with respect to 100 mass% of the pet food, preferably 50 mass% or more of water is absorbed, more preferably 70 mass% or more of water is absorbed, and still more preferably 120 mass% or more of water is absorbed.

<<Hardness (degree of hardness) of grain of pet food>>

In the present embodiment, the hardness of the grains of the pet food immersed in water for 5 seconds is preferably 50.0 N or less, more preferably 40.0 N or less, still more preferably 30.0 N or less, and particularly preferably 20.0 N or less.
In the present embodiment, the "hardness of grains of pet food immersed in water for 5 seconds" is a value measured for a surface on which the surface opening area ratio of the surface on which the pet food is projected in one direction is the lowest. "Surface opening area ratio" and a measurement method thereof will be described later in "Surface opening area ratio of first surface".
In the present specification, the hardness of the pet food is a value obtained by the following measurement method.
Measuring a breaking force when the pet food is compressed at a constant compression rate, using a compression tester (texture analyzer, model number: EZ-SX, manufactured by Shimadzu Corporation).
Specifically, placing one pet food to be measured on the pan, and measuring the test force while the plunger is pressed vertically from directly above at a constant rate. Reading the peak value (maximum value) of the test force as the value of the breaking force. Repeating the measurements on 10 pet foods and calculating the average value.
The unit is converted to Newtons (N) by multiplying the value of the breaking force (unit: kgw) measured by the compression tester by 9.8.
Measurement conditions are as follows.

Plunger: 10 mm in width, 20 mm in length, 1 mm in thickness at the leading end, wedge-shaped plunger
Platform: a flat pan with a diameter of 100 mm
Compression rate: 60 mm/min

The lowest point of the plunger: Set to be pushed by 70% to 90% with respect to the thickness (height) of the pet food.
Measured temperature: 25°C
The pet food immersed in water, which is a target for measuring hardness, can be obtained by the similar steps as those described above (Step 1A) to (Step 5A) for obtaining the "pet food whose water absorption amount is to be measured".
As the hardness of the pet food of the present embodiment, the hardness of the pet food is measured within 20 seconds after removing water attached to the grain surface in the above-described (step 5A). It is preferable that the hardness of the pet food is measured within 10 seconds after water attached to the grain surface is removed in the above-described (step 5A).
In the present embodiment, the hardness of the grains of the pet food immersed in water for 60 seconds is preferably 20.0 N or less, more preferably 15.0 N or less, and still more preferably 10.0 N or less.

< <Volume expansion rate of pet food dough>>

In the pet food of the present embodiment, when the pet food is immersed in water for 5 seconds, with respect to 100 vol% of the dough of the pet food before immersion in the water, the dough expands preferably by 5 vol% or more, the dough expands more preferably by 10 vol% or more, the dough expands still more preferably by 20 vol% or more, and the dough expands particularly preferably by 25 vol% or more (hereinafter, the volume expansion rate will also be referred to as the "dough volume expansion rate after immersion for 5 seconds").

In a case where the dough volume expansion rate after immersion for 5 seconds is within the above-described preferable range, the pet food is likely to absorb water in a short time, and it is easy to provide the pet food having a desired hardness depending on the type, age, and the like of the pet to be fed.

In the pet food of the present embodiment, when the pet food is immersed in water for 60 seconds, with respect to 100 vol% of the dough of the pet food before immersion in the water, the dough expands preferably by 5 vol% or more, the dough expands more preferably by 10 vol% or more, the dough expands still more preferably by 20 vol% or more, and the dough expands particularly preferably by 25 vol% or more (hereinafter, the volume expansion rate will also be referred to as the "dough volume expansion rate after immersion for 60 seconds").

In a case where the dough volume expansion rate after immersion for 60 seconds is within the above-described preferable range, the pet food is likely to absorb water in a short time, and it is easy to provide the pet food having a desired hardness depending on the type, age, and the like of the pet to be fed.

In the present embodiment, the "pet food dough" in the "volume expansion rate of the pet food dough" refers to a portion excluding the opening portion of the food grain. However, in "volume expansion rate of pet food dough", the dough when the pet food is immersed in water does not include water absorbed by the dough. In addition, in the present specification, the "opening" is a fine hole present on surface of or inside pet food. The hole may be connected with a plurality of holes as a communicating hole.

Specifically, the volume expansion rate of the dough when the pet food is immersed in water for 5 seconds or 60 seconds is calculated by the following expressions (2) to (3).

$$\text{Expanded volume of dough after immersion (mm}^3) = \text{dough volume after immersion (mm}^3) - \text{dough volume before immersion (mm}^3) - \text{water absorption amount (mg)} \cdots (2)$$

$$\text{Dough volume expansion rate (\%)} = (\text{dough volume before immersion (mm}^3) + \text{expanded volume of dough after immersion (mm}^3))/\text{dough volume before immersion (mm}^3) \cdots (3)$$

In the present embodiment, the dough volumes before and after immersion in the above expressions (2) to (3) are measured by the following procedure.

(Step 1B) Selecting one grain of the pet food to be measured.

(Step 2B) Calculating the volume of the grain before immersion with an X-ray CT apparatus (for example, CosmoScan FX (manufactured by Rigaku Corporation)).

(Step 3B) Pinching the grain with tweezers and immersing the grain in water.

(Step 4B) 5 seconds or 60 seconds later, taking the grain out of water.

(Step 5B) After Step 4B, leaving the taken-out grain to stand for 5 seconds, and then rolling the grain on a sieve (1 mm opening) to remove water attached to the grain surface.

(Step 6B) Calculating the volume of the grain after immersion with an X-ray CT apparatus.

In the present embodiment, the following photographing conditions are adopted for the CT images in steps 2B and 6B.

(Photographing conditions for CT images)

Tube voltage: 90 kV
Tube current: 88 μA
Irradiation time: 2 minutes
Resolution: 50 μm
Effective field of view (FOV): 25.6 mm × 25.6 mm × 25.6 mm
Matrix: 512 × 512 × 512

In steps 2B and 6B, the dough areas in the respective CT cross-sectional images are calculated by the following procedure.

(ib) Binarizing X-ray CT images using image analysis software (for example, Fiji)(maximum entropy method). In each of the grain cross-sectional images, subtracting the background value and calculating the dough area.

In a case of the above-described condition, since the CT image is measured by dividing the effective field of view (FOV) into 512 equal portions, the thickness of one CT cross-sectional image is considered to be 50 $\mu$m. Therefore, a thickness of 50 $\mu$m is multiplied by the dough area of one CT cross-sectional image to obtain the dough volume of one CT cross-sectional image, and the dough volume of one food grain to be measured can be calculated by adding the dough volumes of all CT cross-sectional images together.

< <Rate of change in opening volume of pet food> >

In the pet food of the present embodiment, when the pet food is immersed in water for 5 seconds, with respect to 100% of the opening volume ratio of the pet food before immersion in the water, the opening volume ratio is preferably 85% or less, more preferably 80% or less, still more preferably 75% or less, and particularly preferably 70% or less (hereinafter, the change rate of the opening volume will also be referred to as the "rate of change in the opening volume after immersion for 5 seconds").

In a case where the rate of change in the opening volume after immersion for 5 seconds is within the above-described preferable range, the pet food is likely to absorb water in a short time, and it is easy to provide the pet food having a desired hardness depending on the type, age, and the like of the pet to be fed.

In the pet food of the present embodiment, when the pet food is immersed in water for 60 seconds, with respect to 100% of the opening volume ratio of the pet food before immersion in the water, the opening volume ratio is preferably 80% or less, more preferably 75% or less, still more preferably 70% or less, and particularly preferably 65% or less (hereinafter, the change rate of the opening volume will also be referred to as the "rate of change in the opening volume after immersion for 60 seconds").

In a case where the rate of change in the opening volume after immersion for 60 seconds is within the above-described preferable range, the pet food is likely to absorb water in a short time, and it is easy to provide the pet food having a desired hardness depending on the type, age, and the like of the pet to be fed.

In the present embodiment, the "opening of pet food" is a void portion where there is no dough in the food grains. In addition, the "opening volume ratio" refers to a ratio (%) of the opening volume to the entire volume of the food grain.

Specifically, the rate of change in the opening volume when the pet food is immersed in water for 5 seconds or 60 seconds is calculated by the following expressions (4) to (6).

$$\text{Opening volume (mm}^3) = \text{grain volume (mm}^3) - \text{dough volume (mm}^3) \cdots (4)$$

$$\text{Opening volume ratio (\%)} = \text{opening volume (mm}^3)/\text{grain volume (mm}^3) \times 100 \cdots (5)$$

$$\text{Rate of change in opening volume (\%)} = \text{opening volume ratio after immersion (\%)/opening volume ratio before immersion (\%)} \times 100 \cdots (6)$$

The grain volume and the dough volume in the above expression (4) are measured by the following steps (ib) to (iiib) using an X-ray CT apparatus and image analysis software, according to the similar procedure and conditions as the dough volume before and after immersion measured when calculating the "dough volume expansion rate" described above (steps 1B to 6B).

(ib) Binarizing X-ray CT images using image analysis software (for example, Fiji)(maximum entropy method). In each of the grain cross-sectional images, subtracting the background value and calculating the dough area.

(iib) In each CT cross-sectional image, filling opening with Fill holes, Dilate/Erode processing to subtract the background value, and calculating the area of the entire grain.

(iiib) The opening area can be calculated by subtracting the dough area calculated in step (ib) from the area of the entire grain calculated in step (iib).

In a case of the above-described condition, since the CT image is measured by dividing the effective field of view (FOV) into 512 equal portions, the thickness of one CT cross-sectional image is considered to be 50 $\mu$m. Therefore, a thickness of 50 $\mu$m is multiplied by the dough area, the grain area, and the opening area of one CT cross-sectional image to obtain the dough volume, the grain volume, and the opening volume of one CT cross-sectional image, the dough volume, the grain volume, and the opening volume of one food grain to be measured can be calculated by adding the volumes of all CT cross-sectional images together, respectively.

<<dough area expansion rate in cross section of central portion of grains of pet food> >

In the pet food of the present embodiment, when the pet food is immersed in water for 5 seconds, with respect to 100 area% of the dough area in the cross section of the central portion of the grain of the pet food before immersion in the water, the dough area increases preferably by 45 area% or more, more preferably 50 area% or more, still more preferably 60 area% or more, and still more preferably 85% or more (hereinafter, the rate of increase in the area will also be referred to as the "rate of change in central cross-sectional dough area after immersion for 5 seconds").

In a case where the rate of change in central cross-sectional dough area after immersion for 5 seconds is within the above-described preferable range, the water is likely to be absorbed to the inside of food grain in a short time, and it is easy to provide the pet food having a desired hardness depending on the type, age, and the like of the pet to be fed.

The rate of change in central cross-sectional dough area after immersion for 5 seconds is calculated by the following expression (7).

$$\text{Rate of change (\%) in central cross-sectional dough area after immersion for 5 seconds} = \text{dough area (mm}^2\text{) of the cross section of central portion of the grain after immersion/dough area (mm}^2\text{) of the cross section of the central portion of the grain before immersion} \times 100 \cdots (7)$$

The dough areas before and after immersion in the above expression (7) are measured by the following procedure.

In the above expression (7), the dough area after immersion includes the area of water absorbed.

(Step 1C) Selecting one grain of the pet food to be measured.

(Step 2C) Calculating the dough area before immersion with an X-ray CT apparatus (for example, CosmoScan FX (manufactured by Rigaku Corporation)).

(Step 3C) Pinching the grain with tweezers and immersing the grain in water.

(Step 4C) 5 seconds or 60 seconds later, taking the grain out of water.

(Step 5C) After Step 4B, leaving the taken-out grain to stand for 5 seconds, and then rolling the grain on a sieve (1 mm opening) to remove water attached to the grain surface.

(Step 6C) Calculating the dough area after immersion with an X-ray CT apparatus.

In the present embodiment, the following photographing conditions are adopted for the CT images in steps 2C and 6C.

(Photographing conditions for CT images)

Tube voltage: 90 kV
Tube current: 88 μA
Irradiation time: 2 minutes
Resolution: 50 μm
Effective field of view (FOV): 25.6 mm × 25.6 mm × 25.6 mm
Matrix: 512 × 512 × 512

In steps 2C and 6C, the dough areas in the respective CT cross-sectional images are calculated by the following procedure. (ic) Binarizing X-ray CT images using image analysis software (for example, Fiji)(maximum entropy method). In each of the grain cross-sectional images, subtracting the background value and calculating the dough area.

In the present embodiment, "the cross section of the central portion of the grain of the pet food" in "rate of change in central cross-sectional dough area after immersion for 5 seconds" refers to a cross section in the range of $(y-(x-1)) \times 1/3 + x$ to $(y-(x-1)) \times 2/3 + x$ in a case where n CT images that are perpendicular to the plane are measured from one direction with the food grain placed on, and when the CT image in which the food grain begins to appear is the x-th sheet and the CT image in which the food grain finishes appearing is the y-th sheet. Here, $x < n$, $y < n$, and $x < y$.

For example, in the case of measuring with the above-described photographing condition of the CT image, that is, FOV: 25.6 mm × 25.6 mm × 25.6 mm, and matrix: 512 × 512 × 512, and when the CT image in which the food grain begins to appear is the 100th sheet and the CT image in which the food grain finishes appearing is the 399th sheet, the CT image of (399 - (100 - 1) × 1/3 + 100 to (399 - (100 - 1) × 2/3 + 100 = 200th sheet to 300th sheet can be regarded as "cross sections of central portions of grain of the pet food".

< <Rate of change in opening area in cross section of central portion of grain of pet food>>

In the pet food of the present embodiment, when the pet food is immersed in water for 5 seconds, with respect to 100% of the opening area ratio of the cross section of the central portion of the grain of the pet food before immersion in the water, the opening area ratio is preferably 80% or less, more preferably 75% or less, still more preferably 70% or less, and particularly preferably 65% or less (hereinafter, the change rate of the opening area ratio will also be referred to as the "rate of change in the central cross-sectional opening area after immersion for 5 seconds").

In a case where the rate of change in central cross-sectional opening area after immersion for 5 seconds is within the above-described preferable range, the water is likely to be absorbed to the inside of food grain in a short time, and it is easy to provide the pet food having a desired hardness depending on the type, age, and the like of the pet to be fed.

The rate of change in central cross-sectional opening area after immersion for 5 seconds is calculated by the following expression (8) to (10).

$$\text{The opening area } (\text{mm}^2) \text{ of the cross section of the central portion of the grain} = \text{the grain area } (\text{mm}^2) \text{ of the cross section of the central portion of the grain} - \text{the dough area } (\text{mm}^2) \cdots (8)$$

$$\text{Opening area ratio } (\%) = \text{opening area } (\text{mm}^2)/\text{grain area } (\text{mm}^2) \times 100 \cdots (9)$$

$$\text{Rate of Change } (\%) \text{ in central cross-sectional opening area after immersion for 5 seconds} = \text{opening area ratio after immersion } (\%)/\text{opening area ratio before immersion } (\%) \cdots (10)$$

The grain area and the dough area in the above expression (8) are measured by the following steps (ic) to (iiic) using an X-ray CT apparatus and image analysis software, according to the similar procedure and conditions as the dough area before and after immersion measured when calculating the "rate of change in central cross-sectional dough area after immersion for 5 seconds" described above (steps 1C to 6C). In the above expression (8), the dough area after immersion includes the area of water absorbed.

   (ic) Binarizing X-ray CT images using image analysis software (for example, Fiji)(maximum entropy method). In each of the grain cross-sectional images, subtracting the background value and calculating the dough area.
   (iic) In each CT cross-sectional image, filling opening with Fill holes, Dilate/Erode processing to subtract the background value, and calculating the area of the entire grain.
   (iiic) The opening area can be calculated by subtracting the dough area calculated in step (ic) from the area of the entire grain calculated in step (iic).

"The cross section of the central portion of the grain of the pet food" in "the rate of change in central cross-sectional opening area after immersion for 5 seconds" is the similar to "the cross section of the central portion of the grain of the pet food" in "the rate of change in central cross-sectional dough area after immersion for 5 seconds".

< <Rate of change in grain density of pet food> >

In the pet food of the present embodiment, when the pet food is immersed in water for 5 seconds, with respect to 100% of the grain density of the pet food before immersion in water, the grain density increases preferably by 10% or more, more preferably 15% or more, and still more preferably 20% or more (hereinafter, the change rate of the grain density will also be referred to as the "rate of change in the grain density after immersion for 5 seconds").

In a case where the rate of change in the grain density after immersion for 5 seconds is within the above-described preferable range, the pet food is likely to absorb water in a short time, and it is easy to provide the pet food having a desired hardness depending on the type, age, and the like of the pet to be fed.

In the pet food of the present embodiment, when the pet food is immersed in water for 60 seconds, with respect to 100% of the grain density of the pet food before immersion in water, the grain density increases preferably by 15% or more, more preferably 20% or more, and still more preferably 25% or more (hereinafter, the change rate of the grain density will also be referred to as the "rate of change in the grain density after immersion for 60 seconds").

In a case where the rate of change in the grain density after immersion for 60 seconds is within the above-described preferable range, the pet food is likely to absorb water in a short time, and it is easy to provide the pet food having a desired hardness depending on the type, age, and the like of the pet to be fed.

The rate of change in the grain density when the pet food is immersed in water for 5 seconds or 60 seconds is calculated by the following expressions (11) to (13).

$$\text{Grain volume (L)} = \text{grain volume (mm}^3)/1{,}000{,}000 \cdots (11)$$

$$\text{Grain density (g/L)} = \text{grain mass (g)/grain volume (L)} \cdots (12)$$

$$\text{Rate of change in grain density } (\%) = \text{grain density after immersion (g/L)/grain density before immersion (g/L)} \times 100 \cdots (13)$$

The grain mass in the above expression (12) can be measured by the similar procedure as in steps 1A to 6A in the measurement of the "water absorption rate".

In addition, regarding the grain volume in the above expression (12), the area of the entire grain (grain area) is measured by the above-described steps (ib) to (iib) using an X-ray CT apparatus and image analysis software, according to the similar procedure and conditions as the grain volume measured when calculating the "rate of change in the opening volume" (above-described steps 1B to 6B). In a case of the above-described condition, since the CT image is measured by dividing the effective field of view (FOV) into 512 equal portions, the thickness of one CT cross-sectional image is considered to be 50 $\mu$m. Therefore, a thickness of 50 $\mu$m is multiplied by the grain area of one CT cross-sectional image to obtain the grain volume of one CT cross-sectional image, and the grain volume of one food grain to be measured can be calculated by adding the volumes of all CT cross-sectional images together.

As described above, in the pet food of the present embodiment, a pet food having a different hardness can be obtained by changing the time for which water is absorbed (time for immersion in water). In addition, in the pet food of the present embodiment, a pet food having a different water absorption amount can be obtained by changing the time for which water is absorbed (time for immersion in water). That is, by causing the pet food having a moisture content of 15% or less to absorb water, the composition of the pet food can be changed to close to the composition of the soft food or the semi-moist food having a moisture content of approximately 25 to 35%, or the composition of the wet food having a moisture content of approximately 75%. In such a case, from the viewpoint of shortening of the water absorption time and handling by the feeder, the temperature of the water in which the pet food is immersed may be 35°C to 60°C, may be 40°C to 60°C, or may be 45°C to 60°C.

In a case where the moisture content of the pet food is low, the water activity tends to be low, and thus the oxidation of lipids and the growth of microorganisms present in the pet food can be suppressed. Therefore, the storage property and handling property of the pet food are enhanced. On the other hand, in a case where the moisture content originally contained in the pet food is low, it means that the pet food is drier, and thus the grain of the pet food becomes hard.

The pet food according to the present embodiment originally has a low moisture content of 15% or less, but can absorb water in a short time to soften the hardness in a short time.

In dogs and cats, preference for the hardness of pet foods may fluctuate depending on their health states, growth states, and the like. Therefore, as in the present embodiment, in a case where the feeder can add water at the time of feeding to produce grains of soft pet food in a short time, the feeder can feed the pet on the pet food whose hardness is changed to a hardness favored by the pet according to the health state, growth condition, and the like of the dog or cat.

Since the pet food according to the present embodiment is a dry-type pet food while being transported or stored, the pet food has excellent storage stability and handling property. Further, in the pet food according to the present embodiment, the composition can be changed to a soft dry-type, a semi-moist type, a wet type, or the like as desired at the time of feeding, and thus the palatability can be enhanced.

<<Surface opening area ratio of first surface>>

In the pet food of the present embodiment, the surface opening area ratio of the first surface from which the pet food is projected in the first direction may be 10% or more.

The first direction is any direction. For example, in a case where the pet food of the present embodiment is mounted on a measurement table of the digital microscope and an image of a surface (top surface) opposite to the mounting surface of the pet food is taken, a direction from the digital microscope toward the top surface of the pet food serves as the first direction. In addition, an image of the top surface of the pet food taken with the digital microscope serves as a first surface on which the pet food is projected.

The surface opening area ratio of the first surface of the pet food of the present embodiment may be 10% or more, preferably 12% or more, more preferably 16% or more, still more preferably 20% or more, particularly preferably 25% or more.

On the other hand, the surface opening area ratio of the first surface of the pet food of the present embodiment is preferably 60% or less, more preferably 55% or less, and still more preferably 50% or less.

For example, the surface opening area ratio of the first surface of the pet food of the present embodiment is preferably 10% or more and 60% or less, more preferably 12% or more and 60% or less, still more preferably 16% or more and 55% or less, particularly preferably 20% or more and 50% or less, and most preferably 25% or more and 50% or less.

In the present specification, the "surface opening area ratio" means a value obtained by photographing an image of the surface of a pet food using a digital microscope (trade name "VHX-7000", manufactured by Keyence Corporation), and measuring the surface opening area ratio excluding a circle-equivalent diameter of less than 50 $\mu$m in automatic area measurement (particle count) as measurement/scale tool of the digital microscope using the image.

A more specific operation procedure is as follows.

(i) Setting the magnification of the digital microscope (for example, setting to 20 times) such that all of the first surface of the pet food mounted on the measurement table is reflected.
(ii) Setting the set value of the epi-illumination to be a numerical value at which the opening is visible most between 100 and 255.
(iii) In automatic area measurement (particle count) as measurement/scale tool of the digital microscope, setting the extraction method to "brightness (standard)". Next, setting the extraction region on the first surface of the pet food.
(iv) In a case where the automatic area measurement (particle count) as measurement/scale tool of the digital microscope is performed excluding the circle-equivalent diameter of less than 50 $\mu$m, the porosity of the first surface of the pet food can be measured.

<<Surface opening area ratio of another surface>>

In the pet food of the present embodiment, the surface opening area ratio of a surface on which the pet food is projected in a direction other than the first direction (hereinafter, also referred to as "another surface") is preferably 8% or less. That is, it is preferable that in the pet food of the present embodiment, a portion having a large number of openings and a portion having a small number of openings are mixed on the surface of the pet food.

The surface opening area ratio of another surface of the pet food of the present embodiment is preferably 8% or less, more preferably 4% or less, and still more preferably 2% or less, and may be 0%.

<<Surface opening area ratio of second surface and third surface>>

In the pet food of the present embodiment, in addition to the first surface of the pet food described above, in a case where a surface on which the pet food is projected on A side in a second direction that intersects the first direction (which may be referred to as a + side, a first side, or one side) is defined as a second surface, and a surface on which the pet food is projected on B side in the second direction (which may be referred to as a - side, a second side, or the other side) is defined as a third surface, a surface opening area ratio of at least any of the second surface and the third surface is preferably 10% or more. That is, it is preferable that in the pet food of the present embodiment, a plurality of portions having a large number of openings are present on the surface of the pet food.

Here, the second direction typically means a direction that is "orthogonal" to the first direction, but the second direction is not limited to a direction that is orthogonal to the first direction, and may mean a predetermined direction that intersects the first direction and is orthogonal to the surface of the pet food.

For example, as a specific example in a case where the second direction is not a direction orthogonal to the first direction, in a case where the pet food of the present embodiment has a tetrahedral shape and the bottom surface is the first surface, the direction orthogonal to the side surface of the tetrahedral pet food is the second direction.

In addition, in a case where the surface of the pet food of the present embodiment does not represent a shape such as a spherical or a cylindrical, the second direction means a direction that is "orthogonal" to the first direction.

The preferable range of the surface opening area ratios of the second surface and the third surface is the similar to the preferable range of the surface opening area ratios of the first surface described above.

In the pet food of the present embodiment, both the surface opening area ratios of the second surface and the third surface of the pet food are preferably 10% or more, in addition to the first surface of the pet food described above.

In the pet food of the present embodiment, it is preferable that the surface opening area ratio of all of the first surface, the second surface, and the third surface is 10% or more, and the surface opening area ratio of at least one surface excluding the first surface, the second surface, and the third surface is 8% or less.

More specifically, in the pet food of the present embodiment, it is preferable that the surface opening area ratio of all of the first surface, the second surface, and the third surface is 10% or more and 60% or less, and that the surface opening area ratio of at least one surface excluding the first surface, the second surface, and the third surface is 8% or less, it is more preferable that the surface opening area ratio of all of the first surface, the second surface, and the third surface is 12% or more and 60% or less, and that the surface opening area ratio of at least one surface excluding the first surface, the second surface, and the third surface is 4% or less, it is still more preferable that the surface opening area ratio of all of the first surface, the second surface, and the third surface is 16% or more and 55% or less, and that the surface opening area ratio of at least one surface excluding the first surface, the second surface, and the third surface is 4% or less, it is even still more preferable that the surface opening area ratio of all of the first surface, the second surface, and the third surface is 20% or more and 50% or less, and that the surface opening area ratio of at least one surface excluding the first surface, the second surface, and the third surface is 4% or less, it is particularly preferable that the surface opening area ratio of all of the first surface, the second surface, and the third surface is 25% or more and 50% or less, and that the surface opening area ratio of at least one surface excluding the first surface, the second surface, and the third surface is 4% or less, and it is most preferable that the surface opening area ratio of all of the first surface, the second surface, and the third surface is 25% or more and 50% or less, and that the surface opening area ratio of at least one surface excluding the first surface, the second surface, and the third surface is 2% or less.

Furthermore, in the above-described pet food, "at least one surface excluding the first surface, the second surface, and the third surface" is preferably "two surfaces excluding the first surface, the second surface, and the third surface".

<<Shape>>

A shape of the pet food in the present embodiment may be any shape suitable for pets to eat, and is not particularly limited.

For example, any shape such as spherical, ellipsoidal (grid-like), pellet-shaped, cylindrical, polygonal columnar, hexahedral (plate-shaped), clover-shaped, heart-shaped, star-shaped, or cruciform-shaped is applicable. Among them, from the viewpoint of making it easier to obtain the effects of the present invention, it is preferable that the sheet has a cylindrical, polygonal columnar, or hexahedral shape, and it is more preferable that the sheet has a hexahedral shape.

< <Hardness> >

The hardness of the pet food of the present embodiment is preferably 60 N or less, more preferably 50 N or less, and still more preferably 40 N or less.

In the present embodiment, the "hardness of grains of pet food" is a value measured for a surface on which the surface opening area ratio of the surface on which the pet food is projected in one direction is the lowest. The "surface opening area ratio" and the measurement method thereof are the similar to those described above in "surface opening area ratio of first surface".

On the other hand, the hardness of the pet food of the present embodiment is preferably 6 N or more, more preferably 8 N or more, and still more preferably 10 N or more.

In the present specification, the hardness of the pet food is a value obtained by the following measurement method.

Measuring a breaking force when the pet food is compressed at a constant compression rate, using a compression tester (texture analyzer, model number: EZ-SX, manufactured by Shimadzu Corporation).

Specifically, placing one pet food to be measured on the pan, and measuring the test force while the plunger is pressed vertically from directly above at a constant rate. Reading the peak value (maximum value) of the test force as the value of the breaking force. Repeating the measurements on 10 pet foods and calculating the average value.

The unit is converted to Newtons (N) by multiplying the value of the breaking force (unit: kgw) measured by the compression tester by 9.8.

Measurement conditions are as follows.

Plunger: 10 mm in width, 20 mm in length, 1 mm in thickness at the leading end, wedge-shaped plunger
Platform: a flat pan with a diameter of 100 mm

Compression rate: 60 mm/min
The lowest point of the plunger: Set to be pushed by 70% to 90% with respect to the thickness (height) of the pet food.
Measured temperature: 25°C

In the pet food of the present embodiment, it is preferable that the hardness of the first surface is a preferable hardness value described above. That is, in the above-described measurement method of the hardness of a pet food, the value (hardness) when the test force is measured while the plunger is pressed against the first surface of the pet food of the present embodiment is preferably 6 Nor more and 60 N or less, more preferably 8 N or more and 50 N or less, and still more preferably 10 N or more and 40 N or less.

In addition, in a case where the pet food of the present embodiment has another surface having a surface opening area ratio of 8% or less, the value (hardness) when the test force is measured while the plunger is pressed against another surface of the pet food of the present embodiment is preferably 15 N or more and 70 N or less, more preferably 20 N or more and 60 N or less, and still more preferably 25 N or more and 50 N or less.

<<Raw materials>>

As the raw material of the pet food of the present embodiment, well-known powder raw material and liquid raw material can be used in the producing of the pet food. The following raw material of the pet food may be used singly or may be used in mixture of two or more kinds.

Specific examples of powder raw material and liquid raw material include: cereals (maize, grain sorghum, wheat, barley, brown rice, oats, rye, wheat flour, rice flour, corn flour, wheat bran, rice, wheat germ, wheat gluten, corn gluten feed, corn gluten meal, bread crumb, and the like); potatos (sweet potato, white potato, and the like); beans (soybeans, broad beans, adzuki bean, pea, defatted soybeans, soybean meal, soybean flour, soy flour, soybean protein, soybean curd refuse, and the like); starches (corn starch, potato starch, tapioca starch, wheat starch, rice starch, white potato starch, sweet potato starch, sago starch, and the like); meats (meats such as beefs, porks, rams, muttons, chickens, turkeys, and poultry, viscera such as lever, meat extract powders and liquids thereof, its products such as pork meals, chicken meals, beef meals, and mixed meals thereof); fish and shellfish (fishes such as tuna, bonito, salmon, codfish, horse mackerel, and sardine, crustaceans such as shrimp and crab, shellfishes, its product such as fish meal, fish extract powders and liquids, dried bonito, and the like); eggs (chicken eggs (whole eggs, dried whole eggs, egg yolk, egg white), and the like); vegetables (carrots, cabbages, green pea, squash, beet pulp, and the like); nuts; mushrooms; saccharides (sugars, glucose, fructose, isomerized sugar, oligosaccharides, starch syrup, syrup, molasses, honey, and the like); milks (whole milk, skim milk, whole milk powder, skim milk powder, whey, cheese, butter, cream, and the like); oils and fats (animal oil and fat (beef tallow, lard, chicken fat, fish oil, and the like); vegetable oils (soybean oil, sesame oil, germ oil, palm oil, corn oil, olive oil, coconut oil, and the like), fatty acid, and the like); dried yeasts and their extract powders and liquids; dietary fibers (cellulose, and the like); herbs; vitamins; minerals; amino acids, sweeteners; colorants; preservatives; thickening agents; modified starch; antioxidants; pH adjusters; seasonings; emulsifiers; baking powder; and aromatics.

Among the above, the pet food of the present embodiment contains preferably cereals and meats. In the pet food of the present embodiment, the content of cereals is preferably 10 to 90 mass%, more preferably 15 to 80 mass%, and still more preferably 20 to 70 mass% with respect to the total amount of the pet food.

In the pet food of the present embodiment, the content of meats is preferably 1 to 40 mass%, more preferably 3 to 30 mass%, and still more preferably 5 to 20 mass% with respect to the total amount of the pet food.

Among them, the composition of the pet food of the present embodiment is preferably mixtures of (a) cereals, (b) beans, (c) meats, (d) fish and shellfish, (e) dietary fiber, (f) dried yeast or its extract powder or liquid, (g) vegetables, (h) vitamins and minerals, and (i) oils and fats. If necessary, the mixture may contain colorants, antioxidants, and seasonings.

In addition, as the configuration of the pet food in the present embodiment, a mixture of (a) cereals, (b) beans, (c) meats, (d) fish and shellfish, (e) dietary fiber, (f) dried yeast or its extract powder or liquid, (g) vegetables, (h) vitamins and minerals, (i) oils and fats, (j) starches, (k) eggs, (1) saccharides, and (m) milks may be used. If necessary, the mixture may contain a colorant, preservatives; thickening agents; antioxidants; pH adjusters; seasonings; emulsifiers; and aromatics.

A formulation example of the pet food of the present embodiment will be described below.

A formulation is adjusted to be cereals (10 to 90 mass%), beans (0 to 40 mass%), meats (0 to 40 mass%), fishes and shellfishes (0 to 40 mass%), dietary fibers (0 to 20 mass%), dried yeast or its extract powder or liquid (0 to 10 mass%), vegetables (0 to 20 mass%), vitamins and minerals (0 to 10 mass%), oils and fats (0 to 20 mass%), colorants (0 to 5 mass%), antioxidants (0 to 5 mass%), and seasonings (0 to 5 mass%).

Hereinafter, as specific aspects of the pet food according to the present embodiment, shape examples (1) and (2) of the food grains will be described in detail with reference to the drawings.

In the following description, an X, Y, and Z orthogonal coordinate system will be used as necessary. In this case, the Z direction represents the height direction (gravitational direction). Two directions orthogonal to the Z direction are the X direction and the Y direction. In the figure, the arrow side is defined as a plus (+) side, and the side opposite to the arrow is referred to as a minus (-) side. For example, the +Z side corresponds to an upper side in the height direction, and the -Z side corresponds to a lower side in the height direction.

(Shape example (1) of food grain of pet food according to the present embodiment)

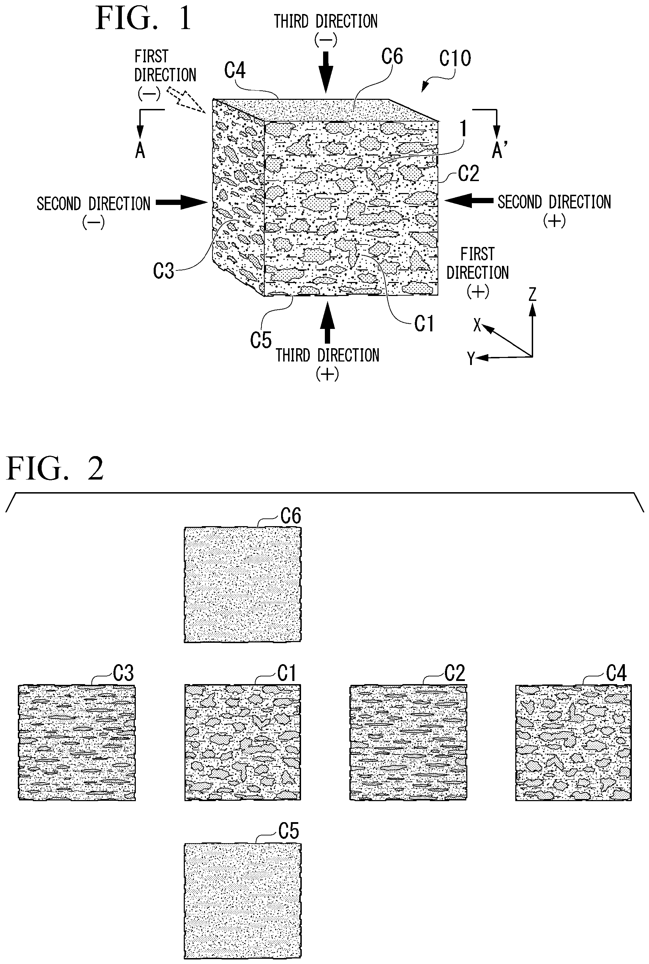

As a shape example (1) of the food grain of the pet food according to the present embodiment, a pet food C10 will be described in detail with reference to FIG. 1.

The pet food C10 is a hexahedral pet food. In the pet food C10, the four side surfaces (side circumferential surfaces) of the pet food C10 are surfaces having many openings 1 compared with the top surface and the bottom surface.

As shown in FIG. 1, the first direction matches the X direction, the second direction matches the Y direction, and the third direction matches the Z direction. That is, two directions orthogonal to the first direction are the second direction and the third direction.

The pet food C10 is a hexahedral pet food, and since two directions orthogonal to the first direction are the second direction and the third direction, the first surface C1 on which the pet food C10 is projected on the A side (+X side) in the first direction matches the side surface on A side of the pet food C10 in the first direction.

In the pet food C10, the surface opening area ratio of the first surface C1 obtained by projecting the pet food C10 on the A side (+X side) in the first direction is 10% or more.

In the pet food C10, a surface on which the pet food C10 is projected on the A side (+X side) in the first direction is the first surface C1. In addition, a surface on which the pet food C10 is projected on the B side (-X side) in the first direction is the fourth surface C4.

In the pet food C10, a surface on which the pet food C10 is projected on the A side (+Y side) in the second direction that is orthogonal to the first direction is the second surface C2. In addition, a surface on which the pet food C10 is projected on the B side (-Y side) in the second direction that is orthogonal to the first direction is the third surface C3.

In the pet food C10, a surface on which the pet food C10 is projected on the A side (+Z side) in the third direction that is orthogonal to the first direction is the fifth surface C5. In addition, a surface on which the pet food C10 is projected on the B side (-Z side) in the third direction that is orthogonal to the first direction is the sixth surface C6.

FIG. 2 is a diagram illustrating surfaces in which the pet food C10 is projected in each direction, that is, first surface C1 to sixth surface C6.

In the pet food C10, the first surface C1 to the fourth surface C4 are surfaces having a surface opening area ratio of 10% or more, and the fifth surface C5 and the sixth surface C6 are surfaces having a surface opening area ratio of 8% or less.

A preferred range of the surface opening area ratios of the first surface C1 to the fourth surface C4 in the pet food C10 is as described above respectively, and for example, preferably 10% or more and 60% or less, more preferably 12% or more and 60% or less, still more preferably 16% or more and 55% or less, particularly preferably 20% or more and 50% or less, and most preferably 25% or more and 50% or less.

A preferred values of the surface opening area ratios of the fifth surface C5 and the sixth surface C6 in the pet food C10 is preferably 8% or less, more preferably 4% or less, and still more preferably 2% or less, and may be 0%.

In addition, as described above, in the pet food C10, the projected first surface C1 matches the side surface on A side in the first direction of the pet food C10, and thus in the pet food C10, the bottom surface and the top surface are surfaces having a surface opening area ratio of 8% or less, and all of the four side circumferential surfaces are surfaces having a surface opening area ratio of with 10% or more.

In the pet food C10, the first surface C1 to the fourth surface C4 are surfaces having a surface opening area ratio of 10% or more, the fifth surface C5 and the sixth surface C6 are surfaces having a surface opening area ratio of 8% or less, but the fourth surface C4 and the second surface C2 or the third surface C3 may be surfaces having a surface opening area ratio of 8% or less. In addition, the fifth surface C5 or the sixth surface C6 may be a surface having a surface opening area ratio of 10% or more.

(Shape example (2) of food grains of pet food according to the present embodiment)

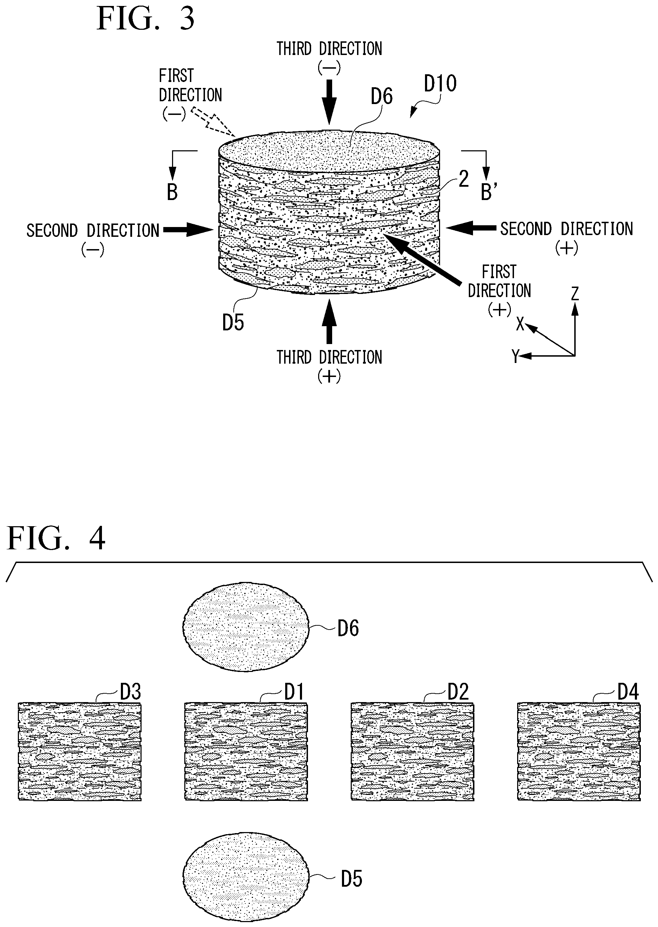

As a shape example (2) of the food grain of the pet food according to the present embodiment, a pet food D10 will be described in detail with reference to FIG. 3.

The pet food D10 is a cylindrical pet food. In the pet food D10, the side circumferential surface is a surface having many openings 2, and the top surface and the bottom surface of the pet food D10 are surfaces having few openings 2.

As shown in FIGS. 3 and 4, the first direction matches the X direction, the second direction matches the Y direction, and the third direction matches the Z direction. That is, two directions orthogonal to the first direction are the second direction and the third direction.

In the pet food D10, the surface opening area ratio of the first surface D10 obtained by projecting the pet food D10 on the A side (+X side) in the first direction is 10% or more.

In the pet food D10, a surface on which the pet food D10 is projected on the A side (+X side) in the first direction is the first surface D1. In addition, a surface on which the pet food D10 is projected on the B side (-X side) in the first direction is the fourth surface D4.

In the pet food D10, a surface on which the pet food D10 is projected on the A side (+Y side) in the second direction that is orthogonal to the first direction is the second surface D2. In addition, a surface on which the pet food D10 is projected on the B side (-Y side) in the second direction that is orthogonal to the first direction is the third surface D3.

In the pet food D10, a surface on which the pet food D10 is projected on the A side (+Z side) in the third direction that is orthogonal to the first direction is the fifth surface D5. In addition, a surface on which the pet food D10 is projected on the B side (-Z side) in the third direction that is orthogonal to the first direction is the sixth surface D6.

Since the pet food D10 has a cylindrical shape, the fifth surface D5 and the top surface of the pet food D10, and the sixth surface D6 and the bottom surface of the pet food D10 are only matched.

FIG. 4 is a diagram illustrating surfaces in which the pet food D10 is projected in each direction, that is, first surfaces D1 to sixth surfaces D6.

In the pet food D10, the first surface D1 to the fourth surface D4 are surfaces having a surface opening area ratio of 10% or more, and the fifth surface D5 and the sixth surface D6 are surfaces having a surface opening area ratio of 8% or less.

A preferred range of the surface opening area ratios of the first surface D1 to the fourth surface D4 in the pet food D10 is as described above respectively, and for example, preferably 10% or more and 60% or less, more preferably 12% or more and 60% or less, still more preferably 16% or more and 55% or less, particularly preferably 20% or more and 50% or less, and most preferably 25% or more and 50% or less.

A preferred value of the surface opening area ratios of the fifth surface D5 and the sixth surface D6 in the pet food D10 is preferably 8% or less, more preferably 4% or less, and still more preferably 2% or less, and may be 0%.

In addition, as described above, in the pet food D10, since the fifth surface D5 and the top surface of the pet food D10, and the sixth surface D6 and the bottom surface of the pet food D10 are only matched, the bottom surface and the top surface are surfaces having a surface opening area ratio of 8% or less, and the side circumferential surface is a surface having a surface opening area ratio of with 10% or more.

(Producing method of pet food)

Examples of the producing method of the pet food of the present embodiment include a producing method of the pet food including a swelling step of swelling the kneaded raw material mixture by extrusion from an extruder to obtain a swollen dough, a porosification step of making the swollen dough porous to obtain a porous dough, and a cutting step of cutting the porous dough.

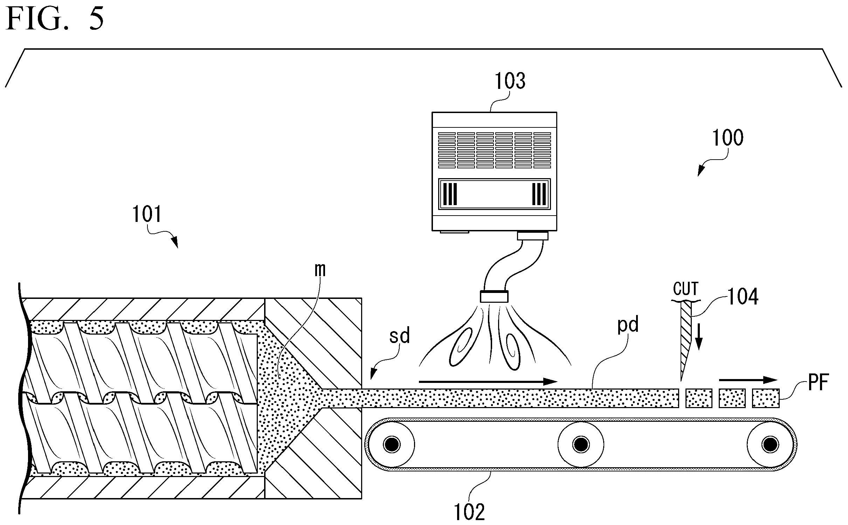

As a specific example of the producing method of the pet food of the present embodiment, the producing method 100 of the pet food will be described in detail with reference to FIG. 5.

As shown in FIG.5, a raw material mixture is kneaded in an extruder 101, and the raw material mixture is extruded from the extruder to obtain swollen dough sd. The obtained swollen dough sd is transported by the belt conveyor 102. The transported swollen dough sd is cooled by the cooler 103 to be made porous to obtain a porous dough pd that has been made porous. The obtained porous dough pd is cut with the cutter 104 to obtain the pet food PF of the present embodiment.

[Swelling step]

The swelling step is a step of swelling the raw material mixture kneaded in the extruder 101 by extrusion from the extruder to make the mixture swollen and to obtain a swollen dough sd.

The extruder 101 is not particularly limited, and a well-known single-screw or twin-screw extruder or the like can be used.

The temperature of the raw material mixture when the raw material mixture is kneaded in the extruder 101 is, for example, preferably 75°C to 140°C, more preferably 80°C to 135°C, and still more preferably 85°C to 130°C.

[Porosification step]

The porosification step is a step of making the swollen dough sd porous to obtain a porous dough pd.

Specific examples of the porosification step include a step of placing the swollen dough sd under atmospheric pressure and cooling the swollen dough sd with the cooler 103.

The cooler 103 is not particularly limited, and a well-known spot cooler or the like can be used.

[Cutting step]

The cutting step is a step of cutting the porous dough pd with the cutter 104. When the porous dough pd is cut by the cutter 104, the porous dough pd may be cut from the machine direction (MD), may be cut from the cross direction (CD), or may be cut from any direction of the MD or the CD. Here, MD refers to the direction in which the porous dough pd flows (also referred to as the direction in which the swollen dough sd extruded from the extruder flows). CD is a direction orthogonal to the direction in which the porous dough pd flows.

The temperature of the porous dough pd when the porous dough pd is cut with the cutter 104 is preferably, for example, 70°C or less.

According to the above-described method, a pet food having a moisture content of 15% or less, in which when the pet food is immersed in water for 5 seconds, 30 mass% or more of water is absorbed with respect to 100 mass% of the pet food, can be obtained.

The above-described producing method of a pet food includes a porosification step, and thus the above-described pet food can be produced easily. Specifically, in a conventional producing method of a pet food, for example, it is common that a cutter is provided at the outlet of the extruder, and the raw material mixture is cut with the cutter at the moment it is extruded from the extruder as described in "Small Animal Clinical Nutrition, 5th edition" (edited by Michael S. Hand, Craig D. Thatcher, Rebecca L. Remillard, Philip Roudebusg, Bruce J. Novotny, published by Mark Morris Associates; 2014; p. 209 to p. 215). On the other hand, in the producing method of a pet food of the present embodiment, after the raw material mixture is extruded from the extruder, the pet food is made porous by leaving a time before being cut with a cutter. Therefore, according to the producing method of a pet food of the present embodiment, the above-described pet food can be easily produced.

In the porosification step in the pet food producing method 100, cooling by the cooler 103 may be performed in a batch manner by moving the swollen dough extruded from the extruder outside the line.

In addition, in the porosification step in the pet food producing method 100, the swollen dough sd is cooled by the cooler 103, but the cooler 103 may not be used. That is, the step of cooling the swollen dough sd at room temperature may be performed by increasing the length of the belt conveyor 102. For example, by adjusting the length of the belt conveyor 10, the swollen dough sd may be placed at room temperature (25°C) from the time of extrusion from the extruder to the time of cutting, for example, for 1 minute or more.

<Other producing method>

The producing method of the pet food of the present embodiment may be a method other than the above-described producing method, and for example, the pet food of the present embodiment may be produced using a raw material that generates gas by heating. Specific examples of the raw material that generates gas include sodium bicarbonate and the like.

< Other embodiment>

According to another embodiment of the present invention, there is provided a pet food having a moisture content of 15% or less, in which when the pet food is immersed in a liquid having a viscosity of 1.5 dPa·s for 5 seconds, the pet food absorbs 30 mass% or more of the liquid with respect to 100 mass% of the pet food (hereinafter, also referred to as a "pet food of the second embodiment").

The pet food according to the present embodiment may consist of only the pet food of the second embodiment or may be a mixture of the pet food of the second embodiment and other pet foods. Other pet foods are not particularly limited and examples thereof include dry-type pet foods, materials, flakes, and the like other than the pet foods of the second embodiment. It is sufficient that, in the mixture of the pet food of the second embodiment and other pet foods, 1% or more of the pet food of the second embodiment is contained with respect to the total amount of the mixture.

Examples of the "liquid having a viscosity of 1.5 dPa·s" typically include a soup-type pet food having a viscosity of 1.5 dPa·s, but the present embodiment is not limited thereto. For example, a liquid in which a thickener is mixed with water and the viscosity is adjusted to 1.5 dPa·s can be applied.

In the second embodiment, the liquid absorption rate (mass basis) of the liquid having a viscosity of 1.5 dPa·s can be measured in the same manner as the water absorption rate in the first embodiment, except that the liquid having a viscosity of 1.5 dPa·s is used instead of water.

In the pet food of the second embodiment, it is preferable that, when the pet food is immersed in a liquid having a viscosity of 1.5 dPa·s for 5 seconds with respect to 100 mass% of the pet food, 30 mass% or more of the liquid is absorbed, preferably 40 mass% or more of the liquid is absorbed, more preferably 50 mass% or more of the liquid is absorbed, and still more preferably 65 mass% or more of the liquid is absorbed.

In the pet food of the second embodiment, it is preferable that, when the pet food is immersed in a liquid having a viscosity of 1.5 dPa·s for 60 seconds with respect to 100 vol% of the pet food, 30 mass% or more of the liquid is absorbed, preferably 40 mass% or more of the liquid is absorbed, more preferably 50 mass% or more of the liquid is absorbed, and still more preferably 65 mass% or more of the liquid is absorbed.

In the pet food of the second embodiment, the hardness of the grains of the pet food immersed in the liquid for 5 seconds is preferably 50.0 N or less, more preferably 45.0 N or less, still more preferably 40.0 N or less, and particularly preferably 35.0 N or less.

In the second embodiment, the hardness of the grains of the pet food can be measured in the same manner as in the first embodiment.

Examples

Hereinafter, the present invention will be further described in detail using examples, but the present invention is not limited to these examples.

(Producing of pet food)

< <Test examples 1 to 4> >

Raw materials constituting a pet food were mixed in a formulation shown in Table 1 to obtain raw material mixture. Water was added to the raw material mixture by a preconditioner in an amount of 12 to 25 parts by mass with respect to 100 parts by mass of the total amount of the raw material mixture, and the mixture was mixed while heating at 70°C to 100°C for 5 seconds to 3 minutes. The heated raw material mixture was put into an extruder, and heat treatment was performed at 80°C to 125°C for 10 seconds to 2 minutes while kneading to gelatinize a starch component, and then discharged from the extruder to obtain a swollen dough. The obtained dough was cooled with a cooler such that the surface temperature of the dough was 70°C or less to obtain a porous dough. Next, the obtained dough was cut with a cutter from MD and CD (only CD in Test Example 4) to have a hexahedral shape, and pet foods of Test Examples 1 to 4 having a hexahedral shape and having openings (a longitudinal length of 8 mm (X direction) × a lateral length of 8 mm (Y direction) × a height (thickness) of 11.5 mm (Z direction)) were obtained.

In Test Examples 1 to 4, the treatment temperatures of the preconditioner and the extruder were adjusted to the temperatures shown in Table 2 to be the grain densities (g/L) shown in Tables 4, 6, 10, and 12.

The pet food of Test Examples 1 to 3 was in the same aspect as the pet food C10 shown in FIG.1, and the surface cut with the cutter was the side circumferential surface. In addition, the first surface of the pet food of Test Examples 1 to 3 and the first surface C1 of the pet food C10 illustrated in FIG. 1 were matched, the third surface of the pet food of Test Examples 1 to 3 and the third surface C3 of the pet food C10 illustrated in FIG. 1 were matched, and the sixth surfaces of the pet foods of Test Examples 1 to 3 and the sixth surface C6 of the pet food C10 illustrated in FIG. 1 were matched.

In the pet food of Test Example 4, only the first surface C1 and the fourth surface C4 in the pet food C10 illustrated in FIG. 1 were surfaces which were cut with a cutter.

< Comparative Test Examples 1 to 3 > >

As a pet food of Comparative Test Example 1, a commercially available pet food for dogs was prepared. As a target grain for each evaluation, ellipsoidal grain having a general shape as a grain of a pet food was selected.

As a pet food of Comparative Test Example 2, a commercially available pet food for cats was prepared.

As a pet food of Comparative Test Example 3, a commercially available pet food for dogs different from the pet food of comparative test example 1 was prepared.

[Table 1]

| Raw material | Formulation ratio (mass%) |
| --- | --- |
| Cereals | 60 |
| Beans | 8 |
| Meats | 13 |

(continued)

| Raw material | Formulation ratio (mass%) |
|---|---|
| Dietary fibers | 5 |
| Yeast | 3 |
| Vegetables | 2 |
| Vitamins and minerals | 2.5 |
| Oils and fats | 6.5 |
| Total | 100 |

[Table 2]

| | Preconditioner treatment temperature (°C) | Extruder treatment temperature (°C) |
|---|---|---|
| Test Example 1 | 95 | 120 |
| Test Example 2 | 90 | 115 |
| Test Example 3 | 90 | 110 |
| Test Example 4 | 90 | 115 |

The moisture content of the pet food of each example was measured with an Infrared Moisture Analyzer FD-720 (manufactured by Kett Electric Laboratory Co. Ltd.). The moisture contents of the pet foods of Test Example and Comparative Test Example are shown in Table 3.

[Table 3]

| | Moisture content (%) |
|---|---|
| Test Example 1 | 8.36% |
| Test Example 2 | 5.20% |
| Test Example 3 | 6.10% |
| Test Example 4 | 9.80% |
| Comparative Test Example 1 | 8.25% |
| Comparative Test Example 2 | 8.50% |
| Comparative Test Example 3 | 9.20% |

<Evaluation of water absorption amount after immersion for 5 seconds>

The pet food whose water absorption amount is to be measured was obtained by the following steps.

(Step 1A) Selecting one grain of each pet food.

(Step 2A) Measuring the mass of the one grain with an electronic balance.

(Step 3A) Pinching the grain with tweezers and immersing the grain in water.

(Step 4A) 5 seconds later, taking the grain out of water.

(Step 5A) After Step 4A, leaving the taken-out grain to stand for 5 seconds, and then rolling the grain on a sieve (1 mm opening) to remove water attached to the grain surface.

(Step 6A) Measuring the mass of the one grain after immersion with an electronic balance.

The water absorption amount was calculated as in the following expression (1). The results are shown in Tables 4 to 5.

$$\text{Water absorption rate for 5 seconds (mass\%)} = \text{(mass (g) of pet food after (step 6A)} - \text{(mass (g)}$$

$$\text{of pet food in (step 2A))/mass (g) of pet food in (step 2A)} \times 100 \cdots (1)$$

<Evaluation of water absorption amount after immersion for 60 seconds>

In the above-described step 4A, the water absorption amount was measured in the same manner as in the <evaluation of water absorption amount after immersion for 5 seconds>, except that "5 seconds" was changed to "60 seconds". The results are shown in Tables 6 to 7.

<Evaluation of dough volume expansion rate after immersion for 5 seconds>

The volume expansion rates of the dough when the pet food was immersed in water for 5 seconds were calculated by the following expressions (2) to (3). The results are shown in Tables 4 to 5.

$$\text{Expanded volume of dough after immersion (mm}^3) = \text{dough volume after immersion (mm}^3) -$$

$$\text{dough volume before immersion (mm}^3) - \text{water absorption amount (mg)} \cdots (2)$$

$$\text{Dough volume expansion rate (\%)} = \text{(dough volume before immersion (mm}^3) + \text{expanded volume}$$

$$\text{of dough after immersion (mm}^3))/\text{dough volume before immersion (mm}^3) \cdots (3)$$

The dough volumes before and after immersion in the above expression (2) to (3) were measured by the following procedure.
(Step 1B) Selecting one grain of the pet food to be measured.
(Step 2B) Calculating the dough volume before immersion with an X-ray CT apparatus (for example, CosmoScan FX (manufactured by Rigaku Corporation)).
(Step 3B) Pinching the grain with tweezers and immersing the grain in water.
(Step 4B) 5 seconds later, taking the grain out of water.
(Step 5B) After Step 4B, leaving the taken-out grain to stand for 5 seconds, and then rolling the grain on a sieve (1 mm opening) to remove water attached to the grain surface.
(Step 6B) Calculating the dough volume after immersion with an X-ray CT apparatus.
The following photographing conditions were adopted for the CT images in steps 2B and 6B.

(Photographing conditions for CT images)

Tube voltage: 90 kV
Tube current: 88 $\mu$A
Irradiation time: 2 minutes
Resolution: 50 $\mu$m
Effective field of view (FOV): 25.6 mm $\times$ 25.6 mm $\times$ 25.6 mm
Matrix: 512 $\times$ 512 $\times$ 512

In steps 2B and 6B, the dough areas in the respective CT cross-sectional images were calculated by the following procedure.
(ib) Binarizing X-ray CT images using image analysis software (for example, Fiji)(maximum entropy method). In each of the grain cross-sectional images, subtracting the background value and calculating the dough area.
Since the CT image was measured by dividing the effective field of view (FOV) into 512 equal portions, the thickness of one CT cross-sectional image is considered to be 50 $\mu$m. Therefore, a thickness of 50 $\mu$m is multiplied by the dough area of one CT cross-sectional image to obtain the dough volume of one CT cross-sectional image, and the dough volume of one food grain to be measured was calculated by adding the volumes of all CT cross-sectional images together.

<Evaluation of dough volume expansion rate after immersion for 60 seconds>

In the above-described step 4B, the volume expansion rate of the dough when the pet food was immersed in water for 60 seconds was calculated by the above-described equations (2) to (3), in the same manner as in the <Evaluation of volume-based dough expansion rate after immersion for 5 seconds>, except that "5 seconds" was changed to "60 seconds". The results are shown in Tables 6 to 7.

<Evaluation of rate of change in opening volume after immersion for 5 seconds>

When the pet food was immersed in water for 5 seconds, the change rate of the opening volume ratio with respect to 100% of the opening volume ratio of the pet food before immersion in water (the rate of change in the opening volume) was calculated by the following expressions (4) to (6). The results are shown in Tables 4 to 5.

$$\text{Opening volume (mm}^3) = \text{grain volume (mm}^3) - \text{dough volume (mm}^3) \cdots (4)$$

$$\text{Opening volume ratio (\%)} = \text{opening volume (mm}^3)/\text{grain volume (mm}^3) \times 100 \cdots (5)$$

$$\text{Rate of change in opening volume (\%)} = \text{opening volume ratio after immersion (\%)}/\text{opening volume ratio before immersion (\%)} \times 100 \cdots (6)$$

The grain volume and the dough volume in the above expression (4) were measured by the following steps (ib) to (iiib) using an X-ray CT apparatus and image analysis software, according to the same procedure and conditions as the dough volume before and after immersion measured when calculating the "dough volume expansion rate" described above (steps 1B to 6B).

    (ib) Binarizing X-ray CT images using image analysis software (for example, Fiji)(maximum entropy method). In each of the grain cross-sectional images, subtracting the background value and calculating the dough area.
    (iib) In each CT cross-sectional image, filling opening with Fill holes, Dilate/Erode processing to subtract the background value, and calculating the area of the entire grain.
    (iiib) Calculating the opening area by subtracting the dough area calculated in step (ib) from the area of the entire grain calculated in step (iib).

In a case of the above-described condition, since the CT image is measured by dividing the effective field of view (FOV) into 512 equal portions, the thickness of one CT cross-sectional image is considered to be 50 $\mu$m. Therefore, a thickness of 50 $\mu$m was multiplied by the dough area, the grain area, and the opening area of one CT cross-sectional image to obtain the dough volume, the grain volume, and the opening volume of one CT cross-sectional image, the dough volume, the grain volume, and the opening volume of one food grain to be measured were calculated by adding the volumes of all CT cross-sectional images together, respectively.

<Evaluation of rate of change in opening volume after immersion for 60 seconds>

In the above-described step 4B, the rate of change in the opening volume was measured in the same manner as in the <rate of change in opening volume after immersion for 5 seconds> except that "5 seconds" was changed to "60 seconds". The results are shown in Tables 6 to 7.

<<Evaluation of rate of change in dough area in cross section of central portion of grain of pet food>>

When the pet food was immersed in water for 5 seconds, the rate of change in the dough area (the rate of change in the central cross-sectional dough area after immersion for 5 seconds) with respect to 100% of the dough area in the cross section of the central portion of the grain of the pet food before immersion in water was calculated by the following expression (7). The results are shown in Table 9.

Rate of change (%) in central cross-sectional dough area after immersion for 5 seconds = dough area (mm$^2$) of the cross section of central portion of the grain after immersion/dough area (mm$^2$) of the cross section of the central portion of the grain before immersion $\times$ 100 $\cdots$ (7)

The dough areas before and after immersion in the above expression (7) were measured by the following procedure.

(Step 1C) Selecting one grain of the pet food to be measured.

(Step 2C) Calculating the dough area before immersion with an X-ray CT apparatus (for example, CosmoScan FX (manufactured by Rigaku Corporation)).

(Step 3C) Pinching the grain with tweezers and immersing the grain in water.

(Step 4C) 5 seconds or 60 seconds later, taking the grain out of water.

(Step 5C) After Step 4B, leaving the taken-out grain to stand for 5 seconds, and then rolling the grain on a sieve (1 mm opening) to remove water attached to the grain surface.

(Step 6C) Calculating the dough area after immersion with an X-ray CT apparatus.

The following photographing conditions were adopted for the CT images in steps 2C and 6C.

(Photographing conditions for CT images)

Tube voltage: 90 kV
Tube current: 88 $\mu$A
Irradiation time: 2 minutes
Resolution: 50 $\mu$m
Effective field of view (FOV): 25.6 mm $\times$ 25.6 mm $\times$ 25.6 mm
Matrix: 512 $\times$ 512 $\times$ 512

In steps 2C and 6C, the dough areas in the respective CT cross-sectional images were calculated by the following procedure. (ic) Binarizing X-ray CT images using image analysis software (for example, Fiji)(maximum entropy method). In each of the grain cross-sectional images, subtracting the background value and calculating the dough area.

"The cross section of the central portion of the grain of the pet food" in "rate of change in central cross-sectional dough area after immersion for 5 seconds" is defined as a cross section in the range of $(y-(x-1)) \times 1/3 + x$ to $(y-(x-1)) \times 2/3 + x$ in a case where 512 CT images that are perpendicular to the plane are measured from one direction with the food grain placed on, the CT image in which the food grain begins to appear is the x-th sheet and the CT image in which the food grain finishes appearing is the y-th sheet. Here, $x < n$, $y < n$, and $x < y$. Table 8 shows x, y, and the number of actually measured in the CT images of each test example and comparative example.

<<Evaluation of rate of change in opening area in cross section of central portion of grain of pet food>>

When the pet food was immersed in water for 5 seconds, the rate of change in the opening area ratio (the rate of change in the central cross-sectional opening area after immersion for 5 seconds) with respect to 100% of the opening area ratio in the cross section of the central portion of the grain of the pet food before immersion in water was calculated by the following expressions (8) to (10). The results are shown in Table 9.

The opening area (mm$^2$) of the cross section of the central portion of the grain = the grain area (mm$^2$) of the cross section of the central portion of the grain - the dough area (mm$^2$) $\cdots$ (8)

Opening area ratio (%) = opening area (mm$^2$)/grain area (mm$^2$) $\times$ 100 $\cdots$ (9)

Rate of Change (%) in central cross-sectional opening area after immersion for 5 seconds = opening area ratio after immersion (%)/opening area ratio before immersion (%) $\cdots$ (10)

The grain area and the dough area in the above expression (8) were measured by the following steps (ic) to (iiic) using an X-ray CT apparatus and image analysis software, according to the same procedure and conditions as the dough area before and after immersion measured when calculating the "rate of change in central cross-sectional dough area after immersion for 5 seconds" described above (steps 1C to 6C). In the above expression (8), the dough area after immersion includes the area of water absorbed.

> (ic) Binarizing X-ray CT images using image analysis software (for example, Fiji)(maximum entropy method). In each of the grain cross-sectional images, subtracting the background value and calculating the dough area.
> (iic) In each CT cross-sectional image, filling opening with Fill holes, Dilate/Erode processing to subtract the background value, and calculating the area of the entire grain.
> (iiic) Calculating the opening area by subtracting the dough area calculated in step (ic) from the area of the entire grain calculated in step (iic).

"The cross section of the central portion of the grain of the pet food" in "the rate of change in central cross-sectional opening area after immersion for 5 seconds" is defined as similar to "the cross section of the central portion of the grain of the pet food" in "the central cross-sectional dough area expansion rate after immersion for 5 seconds".

<Evaluation of rate of change in grain density of pet food after immersion for 5 seconds>

The rate of change in grain density (the rate of change in grain density after immersion for 5 seconds) when the pet food was in water for 5 seconds was calculated by the following expressions (11) to (13). The results are shown in Tables 4 to 5.

$$\text{Grain volume (L)} = \text{grain volume (mm}^3\text{)}/1{,}000{,}000 \cdots (11)$$

$$\text{Grain density (g/L)} = \text{grain mass (g)}/\text{grain volume (L)} \cdots (12)$$

$$\text{Rate of change in grain density (\%)} = \text{grain density after immersion (g/L)}/\text{grain density before immersion (g/L)} \times 100 \cdots (13)$$

The grain mass in the above expression (12) was measured by the similar procedure as in steps 1A to 6A in the measurement of the "water absorption rate".

In addition, regarding the grain volume in the above expression (12), the area of the entire grain (grain area) was measured by the above-described steps (ib) to (iib) using an X-ray CT apparatus and image analysis software, according to the similar procedure and conditions as the grain volume before and after immersion measured when calculating the "rate of change in the opening volume" (above-described steps 1B to 6B). In a case of the above-described condition, since the CT image is measured by dividing the effective field of view (FOV) into 512 equal portions, the thickness of one CT cross-sectional image is considered to be 50 μm. Therefore, a thickness of 50 μm is multiplied by the grain area of one CT cross-sectional image to obtain the grain volume of one CT cross-sectional image, and the grain volume of one food grain to be measured was calculated by adding the volumes of all CT cross-sectional images together.

<Evaluation of rate of change in grain density of pet food after immersion for 60 seconds>

In the above-described step 4B, the rate of change in the grain density (rate of change in the grain density after immersion for 60 seconds) when the pet food was immersed in the water for 60 seconds was measured in the same manner as in <evaluation of rate of change in grain density after immersion for 5 seconds of pet food> except that "5 seconds" was changed to "60 seconds". The results are shown in Tables 6 to 7.

[Table 4]

| | Immersion for 5 seconds | | | | | | | | | | | |
|---|---|---|---|---|---|---|---|---|---|---|---|---|
| | Volume data | | | | | | | | | | | |
| | Before immersion | | | | | | After immersion | | | | | |
| | Grain mass (g) | Grain volume (mm$^3$) | Dough volume (mm$^3$) | Opening volume (mm$^3$) | Opening volume ratio (%) | Grain density (g/L) | Grain mass (g) | Grain volume (mm$^3$) | Dough volume (mm$^3$) | Opening volume (mm$^3$) | Opening volume ratio (%) | Grain density (g/L) |
| Test Example 1 | 0.221 | 741 | 272 | 469 | 63% | 299 | 0.586 | 1261 | 780 | 481 | 38% | 465 |
| Test Example 2 | 0.214 | 562 | 245 | 318 | 57% | 381 | 0.405 | 716 | 528 | 188 | 26% | 566 |
| Test Example 3 | 0.240 | 511 | 278 | 233 | 46% | 469 | 0.431 | 745 | 553 | 192 | 26% | 579 |
| Test Example 4 | 0.145 | 354 | 182 | 172 | 49% | 410 | 0.233 | 416 | 310 | 106 | 26% | 561 |
| Comparative Test Example 1 | 0.246 | 403 | 258 | 145 | 36% | 610 | 0.266 | 418 | 278 | 140 | 33% | 635 |
| Comparative Test Example 2 | 0.080 | 143 | 104 | 39 | 28% | 559 | 0.089 | 150 | 114 | 36 | 24% | 597 |
| Comparative Test Example 3 | 0.149 | 350 | 155 | 195 | 56% | 424 | 0.168 | 368 | 175 | 192 | 52% | 456 |

[Table 5]

| | Immersion for 5 seconds | | | | |
| --- | --- | --- | --- | --- | --- |
| | Volume data | | | | |
| | Comparison before and after immersion | | | | |
| | Water absorption amount (g) | Water absorption rate (%) | Dough volume expansion rate (%) | Change in opening volume ratio (%) | Rate of change in grain density (%) |
| Test Example 1 | 0.365 | 165% | 153% | 60% | 156% |
| Test Example 2 | 0.191 | 89% | 138% | 46% | 149% |
| Test Example 3 | 0.192 | 80% | 130% | 57% | 123% |
| Test Example 4 | 0.088 | 61% | 122% | 53% | 137% |
| Comparative Test Example 1 | 0.019 | 8% | 100% | 93% | 104% |
| Comparative Test Example 2 | 0.009 | 11% | 101% | 87% | 107% |
| Comparative Test Example 3 | 0.019 | 13% | 101% | 94% | 107% |

[Table 6]

| | Immersion for 60 seconds | | | | | | | | | | | |
| --- | --- | --- | --- | --- | --- | --- | --- | --- | --- | --- | --- | --- |
| | Volume data | | | | | | | | | | | |
| | Before immersion | | | | | | After immersion | | | | | |
| | Grain mass (g) | Grain volume (mm$^3$) | Dough volume (mm$^3$) | Opening volume (mm$^3$) | Opening volume ratio (%) | Grain density (g/L) | Grain mass (g) | Grain volume (mm$^3$) | Dough volume (mm$^3$) | Opening volume (mm$^3$) | Opening volume ratio (%) | Grain density (g/L) |
| Test Example 1 | 0.212 | 668 | 264 | 404 | 60% | 318 | 0.601 | 1148 | 780 | 368 | 32% | 524 |
| Test Example 2 | 0.180 | 468 | 203 | 266 | 57% | 385 | 0.371 | 653 | 464 | 189 | 29% | 568 |
| Test Example 3 | 0.207 | 469 | 241 | 228 | 49% | 442 | 0.427 | 747 | 547 | 201 | 27% | 572 |
| Test Example 4 | 0.148 | 371 | 182 | 188 | 51% | 399 | 0.254 | 459 | 325 | 135 | 29% | 554 |
| Comparative Test Example 2 | 0.079 | 141 | 100 | 42 | 29% | 558 | 0.092 | 150 | 115 | 36 | 24% | 615 |

[Table 7]

| | Immersion for 60 seconds | | | | |
| | Volume data | | | | |
| | Comparison before and after immersion | | | | |
| | Water absorption amount (g) | Water absorption rate (%) | Dough volume expansion rate (%) | Change in opening volume ratio (%) | Rate of change in grain density (%) |
|---|---|---|---|---|---|
| Test Example 1 | 0.389 | 183% | 148% | 53% | 165% |
| Test Example 2 | 0.191 | 106% | 135% | 51% | 148% |
| Test Example 3 | 0.220 | 106% | 136% | 55% | 129% |
| Test Example 4 | 0.107 | 72% | 120% | 58% | 139% |
| Comparative Test Example 2 | 0.013 | 17% | 101% | 81% | 110% |

[Table 8]

| | Before immersion | | | After immersion | | |
| | x (sheet) | Image to be measured (sheet) | y (sheet) | x (sheet) | Image to be measured (sheet) | y (sheet) |
|---|---|---|---|---|---|---|
| Test Example 1 | 158 | 251 | 345 | 137 | 253 | 371 |
| Test Example 2 | 161 | 257 | 354 | 154 | 256 | 360 |
| Test Example 3 | 163 | 254 | 346 | 155 | 264 | 374 |
| Test Example 4 | 183 | 264 | 346 | 168 | 253 | 340 |
| Comparative Test Example 1 | 151 | 253 | 356 | 161 | 262 | 365 |
| Comparative Test Example 2 | 171 | 252 | 335 | 182 | 259 | 338 |
| Comparative Test Example 3 | 148 | 250 | 354 | 155 | 252 | 350 |

[Table 9]

| | Immersion for 5 seconds | | | | | | | | | |
| --- | --- | --- | --- | --- | --- | --- | --- | --- | --- | --- |
| | Grain central portion area data | | | | | | | | | |
| | Before immersion | | | | After immersion | | | | Comparison before and after immersion | |
| | Grain area (mm$^2$) | Dough area (mm$^2$) | Opening area (mm$^2$) | Opening area ratio (%) | Grain area (mm$^2$) | Dough area (mm$^2$) | Opening area (mm$^2$) | Opening area ratio (%) | Dough area expansion rate (%) | Change in opening area ratio (%) |
| Test Example 1 | 91.6 | 36.7 | 54.9 | 60% | 123.8 | 81.8 | 42.0 | 34% | 223% | 57% |
| Test Example 2 | 64.2 | 27.6 | 36.6 | 57% | 74.7 | 55.6 | 19.1 | 26% | 202% | 45% |
| Test Example 3 | 64.6 | 33.2 | 31.3 | 49% | 81.3 | 62.3 | 19.1 | 23% | 187% | 48% |
| Test Example 4 | 61.1 | 27.6 | 33.5 | 55% | 68.5 | 49.8 | 18.8 | 27% | 180% | 50% |
| Comparative Test Example 1 | 54.7 | 31.6 | 23.1 | 42% | 57.7 | 37.4 | 20.3 | 35% | 118% | 83% |
| Comparative Test Example 2 | 24.4 | 17.9 | 6.4 | 26% | 26.6 | 20.0 | 6.6 | 25% | 111% | 94% |
| Comparative Test Example 3 | 44.1 | 16.1 | 28.0 | 64% | 48.6 | 23.0 | 25.5 | 53% | 143% | 83% |

From the results shown in Tables 4 to 7, it was confirmed that the pet food of Test Examples absorbs a larger amount of water in a short time since the water absorption rate is high compared with the pet food of Comparative Test Examples.

In addition, from the results shown in Tables 4 to 7, it was confirmed that the pet food of Test Examples absorbs a larger amount of water in a short time since the dough volume expansion rate is large and the change in the opening volume ratio is large (the opening volume ratio was decreased) compared with the pet food of Comparative Test Examples.

In addition, from the results shown in Tables 4 to 7, it was confirmed that the pet food of Test Examples absorbs a larger amount of water in a short time since the rate of change in grain density is high compared with the pet food of Comparative Test Examples.

From the results shown in Table 9, it can be confirmed that the pet food of Test Examples absorbs water and that the grains are swollen compared with the pet food of Comparative Test Examples.

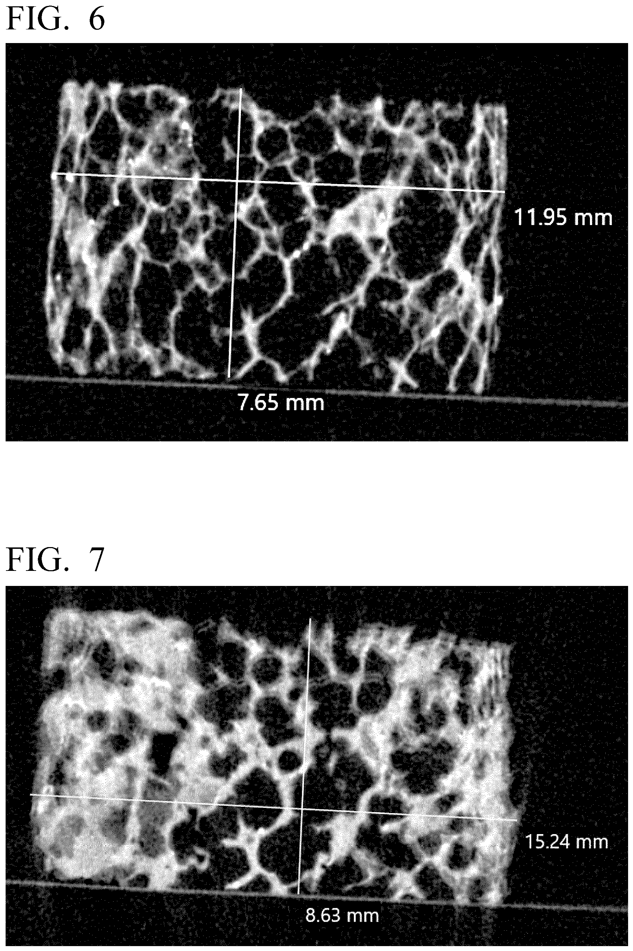

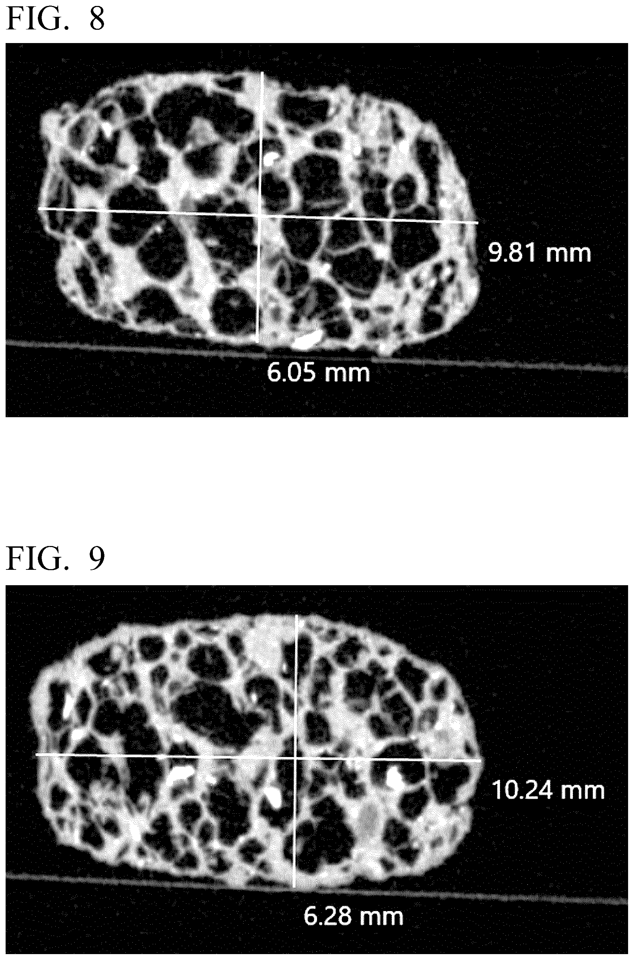

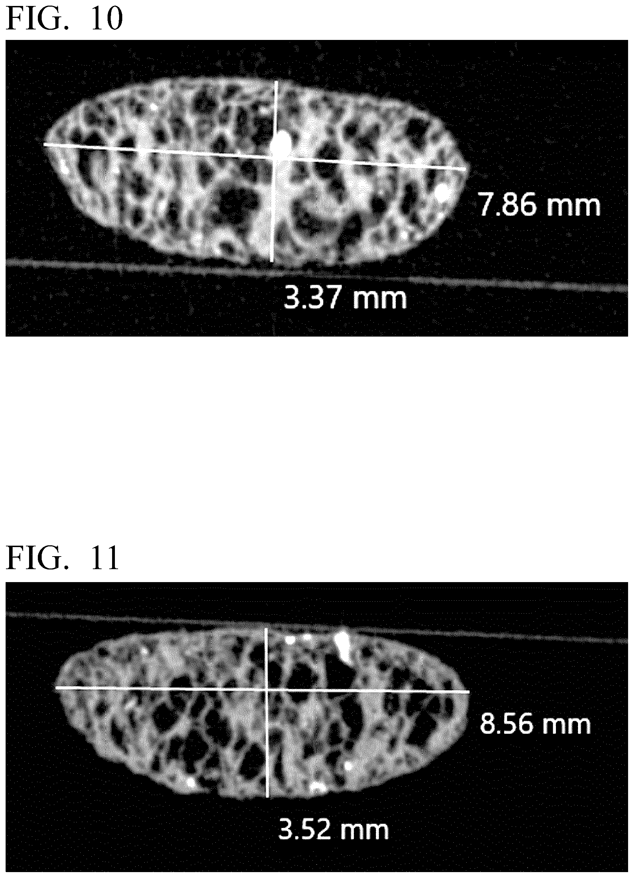

FIG. 6 is a CT image of a cross section of a central portion of a grain that is perpendicular to a plane from a first direction in FIG. 1, of a pet food according to Test Example 1 before immersion in water. FIG. 7 is a CT image of a cross section of a central portion of a grain that is perpendicular to a plane from a first direction in FIG. 1, of a pet food according to Test Example 1 after being immersed in water for 5 seconds. FIG. 8 is a CT image of a cross section of a central portion of a grain that is perpendicular to a plane from one direction, of a pet food for dogs (commercially available product) of Comparative Test Example 1 before immersion in water. FIG. 9 is a CT image of a cross section of a central portion of a grain that is perpendicular to a plane from one direction, of a pet food for dogs (commercially available product) of Comparative Test Example 1 after immersion in water for 5 seconds. FIG. 10 is a CT image of a cross section of a central portion of a grain that is perpendicular to a plane from one direction, of a pet food for cats (commercially available product) of Comparative Test Example 2 before immersion in water. FIG. 11 is a CT image of a cross section of a central portion of a grain that is perpendicular to a plane from one direction, of a pet food for cats (commercially available product) of Comparative Test Example 2 after immersion in water for 5 seconds.

In FIGS. 6, 8, and 10, white portions are dough portions, and black portions are opening portions. In addition, in FIGS. 7, 9, and 11, white portions are dough portions and water-absorbed portions, and black portions are opening portions.

As shown in FIGS. 6 to 11, it can be confirmed that the pet food of Test Example 1 absorbs water and that the grains are swollen compared with the pet food of Comparative Test Examples 1 and 2.

<Evaluation using liquid having viscosity of 1.5 dPa·s>

For the pet food of Test Example 2 and the pet food of Comparative Test Example 2 were evaluated in the same manner as described above <Evaluation of water absorption amount after immersion for 5 seconds>, <Evaluation of water absorption amount after immersion for 60 seconds>, <Evaluation of volume-based dough expansion rate after immersion for 5 seconds>, <Evaluation of volume-based dough expansion rate after immersion for 60 seconds>, <Evaluation of rate of change in opening volume after immersion for 5 seconds>, <Evaluation of rate of change in opening volume after immersion for 60 seconds>, <Evaluation of rate of change in grain density of pet food after immersion for 5 seconds>, and <Evaluation of rate of change in grain density of pet food after immersion for 60 seconds >, except that a commercially available soup-type pet food with a viscosity adjusted to 1.5 dPa·s at a temperature of 20°C was used in place of water. The results are shown in Tables 10 to 13.

[Table 10]

Immersion for 5 seconds

Volume data

| | Before immersion | | | | | | After immersion | | | | | |
|---|---|---|---|---|---|---|---|---|---|---|---|---|
| | Grain mass (g) | Grain volume (mm³) | Dough volume (mm³) | Opening volume (mm³) | Opening volume ratio (%) | Grain density (g/L) | Grain mass (g) | Grain volume (mm³) | Dough volume (mm³) | Opening volume (mm³) | Opening volume ratio (%) | Grain density (g/L) |
| Test Example 2 | 0.188 | 545 | 217 | 328 | 60% | 345 | 0.319 | 603 | 360 | 243 | 40% | 529 |
| Comparative Test Example 2 | 0.077 | 139 | 101 | 38 | 27% | 554 | 0.087 | 146 | 108 | 38 | 26% | 598 |

[Table 11]

| | Immersion for 5 seconds | | | | |
| --- | --- | --- | --- | --- | --- |
| | Volume data | | | | |
| | Comparison before and after immersion | | | | |
| | Water absorption amount (g) | Water absorption rate (%) | Dough volume expansion rate (%) | Change in opening volume ratio (%) | Rate of change in grain density (%) |
| Test Example 2 | 0.131 | 70% | 106% | 67% | 153% |
| Comparative Test Example 2 | 0.010 | 13% | 96% | 96% | 108% |

[Table 12]

| | Immersion for 60 seconds | | | | | | | | | | | |
| --- | --- | --- | --- | --- | --- | --- | --- | --- | --- | --- | --- | --- |
| | Volume data | | | | | | | | | | | |
| | Before immersion | | | | | | After immersion | | | | | |
| | Grain mass (g) | Grain volume (mm$^3$) | Dough volume (mm$^3$) | Opening volume (mm$^3$) | Opening volume ratio (%) | Grain density (g/L) | Grain mass (g) | Grain volume (mm$^3$) | Dough volume (mm$^3$) | Opening volume (mm$^3$) | Opening volume ratio (%) | Grain density (g/L) |
| Test Example 2 | 0.201 | 537 | 228 | 309 | 58% | 375 | 0.352 | 604 | 401 | 203 | 34% | 583 |
| Comparative Test Example 2 | 0.081 | 150 | 105 | 45 | 30% | 541 | 0.096 | 160 | 120 | 40 | 25% | 596 |

[Table 13]

| | Immersion for 60 seconds | | | | |
| --- | --- | --- | --- | --- | --- |
| | Volume data | | | | |
| | Comparison before and after immersion | | | | |
| | Water absorption amount (g) | Water absorption rate (%) | Dough volume expansion rate (%) | Change in opening volume ratio (%) | Rate of change in grain density (%) |
| Test Example 2 | 0.151 | 75% | 110% | 58% | 155% |
| Comparative Test Example 2 | 0.015 | 18% | 101% | 83% | 110% |

From the results shown in Tables 10 to 13, it was confirmed that the pet food of Test Examples absorbs a larger amount of soup-type pet food in a short time since the water absorption rate is high compared with the pet food of Comparative Test Examples.

In addition, from the results shown in Tables 10 to 13, it was confirmed that the pet food of Test Examples absorbs a larger amount of soup-type pet food in a short time since the dough volume expansion rate is large and the change in the opening volume ratio is large (the opening volume ratio was decreased) compared with the pet food of Comparative Test Examples.

In addition, from the results shown in Tables 10 to 13, it was confirmed that the pet food of Test Examples absorbs a larger amount of soup-type pet food in a short time since the rate of change in grain density is high compared with the pet food of Comparative Test Examples.

<Evaluation of hardness>

The pet food whose hardness is to be evaluated was evaluated using the grain of the pet food before immersion and the grain of the pet food after immersion in water, or a commercially available soup-type pet food with a viscosity adjusted to 1.5 dPa·s at a temperature of 20°C for 5 seconds, among the pet foods to be measured obtained in the above < Evaluation of water absorption amount > .

For the pet food of Test Examples 1 to 4, hardness was measured for the surface having the lowest surface opening area ratio on the surface on which the pet food was projected in one direction (the fifth surface C5 or the sixth surface C6 which is the surface in the third direction in FIG. 1).

For the pet foods of Comparative Test Examples 2 and 3, since there is no surface having a large difference in the porosity on the grain surfaces, the hardness of the pet foods was measured while being placed such that the long diameter was parallel to the pan.

The hardness values of the pet foods of each example were obtained by the following measurement method.

Measuring a breaking force when the pet food is compressed at a constant compression rate, using a compression tester (texture analyzer, model number: EZ-SX, manufactured by Shimadzu Corporation).

Specifically, placing one pet food to be measured on the pan, and measuring the test force while the plunger is pressed vertically from directly above at a constant rate. Reading the peak value (maximum value) of the test force as the value of the breaking force. Repeating the measurements on 10 pet foods and calculating the average value.

The unit is converted to Newtons (N) by multiplying the value of the breaking force (unit: kgw) measured by the compression tester by 9.8.

Measurement conditions are as follows.

Plunger: 10 mm in width, 20 mm in length, 1 mm in thickness at the leading end, wedge-shaped plunger

Platform: a flat pan with a diameter of 100 mm

Compression rate: 60 mm/min

The lowest point of the plunger: Set to be pushed by 70% to 90% with respect to the thickness (height) of the pet food.

Measured temperature: 25°C

The results are shown in Table 14.

Table 14]

| | Hardness (N) | | |
|---|---|---|---|
| | Before immersion | After immersion in water for 5 seconds | After immersion in commercially available product with viscosity of 1.5 dPa·s for 5 seconds |
| Test Example 1 | 29.5 | 9.8 | 24.2 |
| Test Example 2 | 37.4 | 14.7 | 32.9 |
| Test Example 3 | 54.6 | 22.7 | 47.5 |
| Comparative Test Example 2 | 71.8 | 66.1 | 71.7 |
| Comparative Test Example 3 | 52.2 | 45.1 | 47.6 |

From the evaluation of the hardness, it was confirmed that the pet food of the test example became soft in a short time compared with the pet food of the comparative test example.

<<Reference Example 1, Test Example 5, Comparative Test Examples 4 to 5>>

The pet food of Reference Example 1 whose palatability is to be evaluated was produced by the above-described producing method in the same manner as in Test Examples 1 to 4 and in the formulation shown in Table 1. In addition, the moisture content of the pet food of Example 1 determined by the "drying loss method" described above was 8.4%.
The pet food obtained by immersing the pet food of Reference Example 1 in water for 5 seconds was used as a pet food of Test Example 5.
The pet food obtained by immersing the pet food of Comparative Test Example 1 in water for 5 seconds was used as a pet food of Comparative Test Example 4.
A commercially available soft food was used as a pet food of Comparative Test Example 5.

<Evaluation of palatability>

The palatability of the pet food P of Test Example 5 and each of the pet food Q of Comparative Test Example 4 or 5 were evaluated by a method for comparing the food intake. Twelve dogs were monitored and tested for 2 days.
On the first day, pet foods P and Q was fed simultaneously, one from the left side and the other from the right side, at a predetermined feed amount to one dog, and the amount of the pet food eaten by the dog was measured at the time or after 30 minutes from when the dog completely consumed either one of the pet foods P and Q.
The ratio (P:Q, P + Q = 100%) of the intake of pet food Q and the intake of pet food P with respect to the total weight of the pet food eaten by one of the dogs on the first day, was calculated as a percentage. The percentages obtained, based on the number of dogs monitored, were averaged as the results of the first day.
On the second day, the pet foods P and Q were fed simultaneously, one from the right side and the other from the left side, contrary to the first day. One dog was fed the same amount as on the first day, and the amount of pet food eaten by the dog was measured at the time or after 30 minutes from when the dog completely consumes either one of them. The results of the second day were obtained by the similar calculation method as that of the first day.
Finally, the results of the first day and the second day were averaged to calculate the ratio [P:Q] of the food intake of pet food P:pet food Q, which is the final result. A higher value of P or Q indicates that the dog serving as the monitor prefers to eat. In a case where the value of P is higher than 50%, this means that the palatability is enhanced compared with the pet food Q.
As a result of the palatability test, for the pet food of Test Example 5 and the pet food of Comparative Test Example 4, P:Q=62:38, and thus the pet food of Test Example 5 was evaluated as having a higher palatability than the pet food of Comparative Test Example 4. This can be presumed that since the pet food of Test Example 5 absorbs more water than the pet food of Comparative Test Example 4, the palatability was enhanced.
In addition, for the pet food of Test Example 5 and the pet food of Comparative Test Example 5, P:Q=53:47, and thus the pet food of Test Example 5 was evaluated to have a palatability equivalent to or more than that of a commercially available soft food. Therefore, it can be confirmed that the pet food of Test Example 5 has advantages of a dry pet food such as storage property and handling property, and that, when immersed in water, the palatability is enhanced to be equivalent to or more than that of a soft food.

From the above, it could be confirmed that the pet food of Examples to which the present invention is applied has an excellent water absorption rate even in a short-time immersion, and further, the palatability is enhanced when the pet food is immersed in water.

Although preferable examples of the present invention have been described above, the present invention is not limited to these examples. Configurations can be added, omitted, and replaced, and other modifications can be made within a range not departing from the spirit of the present invention. The present invention is not limited by the foregoing description, and is limited only by the appended claims.

**Claims**

1.  A pet food having a moisture content of 15% or less, wherein when the pet food is immersed in water for 5 seconds, 30 mass% or more of water is absorbed with respect to 100 mass% of the pet food.

2.  The pet food according to claim 1, wherein a hardness of a grain of the pet food immersed in the water for 5 seconds is 50.0 N or less.

3.  The pet food according to claim 1 or 2, wherein when the pet food is immersed in the water for 60 seconds, 50 mass% or more of the water is absorbed with respect to 100 mass% of the pet food.

4.  The pet food according to any one of claims 1 to 3, wherein when the pet food is immersed in the water for 5 seconds, a dough of the pet food expands by 5 vol% or more with respect to 100 vol% of the dough before the pet food is immersed in the water.

5.  The pet food according to any one of claims 1 to 4, wherein when the pet food is immersed in the water for 60 seconds, a dough of the pet food expands by 5 vol% or more with respect to 100 vol% of the dough before the pet food is immersed in the water.

6.  The pet food according to any one of claims 1 to 5, wherein when the pet food is immersed in the water for 5 seconds, an opening volume ratio of the pet food is 85% or less with respect to 100% of the opening volume ratio before the pet food is immersed in the water.

7.  The pet food according to any one of claims 1 to 6, wherein when the pet food is immersed in the water for 60 seconds, an opening volume ratio of the pet food is 80% or less with respect to 100% of the opening volume ratio before the pet food is immersed in the water.

8.  The pet food according to any one of claims 1 to 7, wherein when the pet food is immersed in the water for 5 seconds, a dough area in a cross section of a central portion of a grain of the pet food increases by 45% or more with respect to 100% of the dough area before the pet food is immersed in the water.

9.  The pet food according to any one of claims 1 to 8, wherein when the pet food is immersed in the water for 5 seconds, an opening area ratio of a cross section of a central portion of a grain of the pet food is 80% or less with respect to 100% of the opening area ratio before the pet food is immersed in the water.

10. The pet food according to any one of claims 1 to 9, wherein when the pet food is immersed in the water for 5 seconds, a grain density of the pet food increases by 10% or more with respect to 100% of the grain density before the pet food is immersed in the water.

11. The pet food according to any one of claims 1 to 10, wherein when the pet food is immersed in the water for 60 seconds, a grain density of the pet food increases by 15% or more with respect to 100% of the grain density before the pet food is immersed in the water.

12. A pet food having a moisture content of 15% or less, wherein when the pet food is immersed in a liquid having a viscosity of 1.5 dPa·s for 5 seconds, 30 mass% or more of the liquid is absorbed with respect to 100 mass% of the pet food.

13. The pet food according to claim 12, wherein a hardness of a grain of the pet food immersed in the liquid for 5 seconds is 50.0 N or less.

FIG. 1

FIG. 2

# FIG. 3

THIRD DIRECTION (−)

FIRST DIRECTION (−)

D6    D10

B    2    B'

SECOND DIRECTION (−)    SECOND DIRECTION (+)

FIRST DIRECTION (+)

D5

THIRD DIRECTION (+)

Z, X, Y

# FIG. 4

D6

D3    D1    D2    D4

D5

# FIG. 5

EP 4 248 760 A1

FIG. 6

11.95 mm

7.65 mm

FIG. 7

15.24 mm

8.63 mm

FIG. 8

9.81 mm

6.05 mm

FIG. 9

10.24 mm

6.28 mm

FIG. 10

FIG. 11

## INTERNATIONAL SEARCH REPORT

| International application No. |
| --- |
| **PCT/JP2021/048863** |

| **A.** | **CLASSIFICATION OF SUBJECT MATTER** |
| --- | --- |

*A23K 40/10*(2016.01)i; *A23K 50/42*(2016.01)i
FI:   A23K50/42; A23K40/10

According to International Patent Classification (IPC) or to both national classification and IPC

| **B.** | **FIELDS SEARCHED** |
| --- | --- |

Minimum documentation searched (classification system followed by classification symbols)

A23K10/00-50/90; A23P10/00-30/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); JST7580 (JDreamIII)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | JP 2014-187920 A (NISSHIN PET FOOD KK) 06 October 2014 (2014-10-06)<br>paragraphs [0014], [0017] | 1-13 |
| A | JP 2002-238470 A (NISSHIN PET FOOD KK) 27 August 2002 (2002-08-27)<br>paragraphs [0002], [0012], [0017] | 1-13 |
| A | JP 2018-50541 A (UNI CHARM CORP) 05 April 2018 (2018-04-05)<br>entire text, all drawings | 1-13 |
| A | JP 2015-126715 A (UNI CHARM CORP) 09 July 2015 (2015-07-09)<br>entire text, all drawings | 1-13 |
| A | US 2016/0330998 A1 (BIG HEART PET, INC.) 17 November 2016 (2016-11-17)<br>entire text, all drawings | 1-13 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 March 2022** | **15 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/048863**

| Patent document cited in search report | | | Publication date (day/month/year) | Patent family member(s) | | | Publication date (day/month/year) |
|---|---|---|---|---|---|---|---|
| JP | 2014-187920 | A | 06 October 2014 | (Family: none) | | | |
| JP | 2002-238470 | A | 27 August 2002 | (Family: none) | | | |
| JP | 2018-50541 | A | 05 April 2018 | US entire text, all drawings WO EP | 2020/0029597 2018/061880 3498105 | A1 A1 A1 | |
| JP | 2015-126715 | A | 09 July 2015 | WO entire text, all drawings TW | 2015/072156 201531230 | A1 A | |
| US | 2016/0330998 | A1 | 17 November 2016 | WO entire text, all drawings | 2016/187041 | A1 | |

Form PCT/ISA/210 (patent family annex) (January 2015)

**REFERENCES CITED IN THE DESCRIPTION**

**Patent documents cited in the description**

- JP 2020219694 A
- JP 2021213428 A

- JP 2014187920 A